# EUROPEAN PATENT APPLICATION

(11) **EP 4 644 067 A1**
(43) Date of publication of application: **05.11.2025**
(21) Application number: 23910132.2
(22) Date of filing: 13.12.2023
(51) Int. Cl.: B25J 17/00, A47L 11/24

(54) **MECHANICAL JOINT, MECHANICAL ARM, AND SELF-MOVING CLEANING APPARATUS**

(30) Priority: 30.12.2022 CN 202211735919
(71) Applicant: Beijing Roborock Technology Co., Ltd., Beijing 102206 (CN)
(72) Inventor: YU, Qiang, Beijing 102206 (CN); LI, Changcheng, Beijing 102206 (CN); ZHANG, Liangzhou, Beijing 102206 (CN)
(74) Representative: Thoma, Michael
(86) International application number: PCT/CN2023/138336
(87) International publication number: WO 2024/140202

(57) **Abstract**

A mechanical joint, a mechanical arm, and a self-moving cleaning apparatus. The mechanical joint comprises: a first guide nut (210), a first screw rod (230) and a first driving portion (220), wherein the first guide nut is in threaded connection with the first screw rod and is hinged to a rotating seat (55); the first driving portion is arranged on a supporting arm (60); a first end of the first screw rod is connected to the first driving portion, and a second end of the first screw rod passes through the first guide nut and is configured to face the rotating seat; and the first driving portion is configured to drive the first screw rod to rotate, so that the first screw rod and the first guide nut move relative to each other to drive the supporting arm to ascend or descend relative to the rotating seat. The mechanical joint is applied to a mechanical arm (001). The mechanical arm comprises a rotating seat and a supporting arm hinged to the rotating seat. The self-moving cleaning apparatus comprises the mechanical arm.

## Description

### CROSS-REFERENCE TO RELATED APPLICATION

The present application claims priority to the Chinese patent application No. 202211735919.6, filed with the China National Intellectual Property Administration on December 30, 2022 and entitled "MECHANICAL JOINT, MECHANICAL ARM AND SELF-MOVING CLEANING DEVICE", which is incorporated herein by reference in its entirety.

### TECHNICAL FIELD

The present application relates to the technical field of mechanical arms, and in particular to a mechanical joint, a mechanical arm and a self-moving cleaning device.

### BACKGROUND ART

With the rapid advancement of science and technology and the steady improvement in people's living standards, self-moving cleaning devices, such as intelligent sweeping robots, have progressively entered our daily lives. In order to better achieve a sweeping function, a mechanical arm is added to the current self-moving cleaning device to achieve the grasping or movement of obstacles or garbage.

Mechanical joints are usually required in the mechanical arm to achieve a raising or lowering operation of the mechanical arm.

### SUMMARY OF THE INVENTION

### (I) Object of the present application

An object of the present application is to provide a mechanical joint, a mechanical arm and a self-moving cleaning device.

### (II) Technical solutions

In a first aspect of the present application, a mechanical joint is provided. The mechanical joint is applicable to a mechanical arm, which includes a rotatable base and a support arm hinged to the rotatable base. The mechanical joint includes: a first guiding nut, a first screw rod and a first driving part. The first guiding nut is in threaded connection with the first screw rod and hinged to the rotatable base; the first driving part is arranged on the support arm, a first end of the first screw rod is connected to the first driving part, and a second end of the first screw rod passes through the first guiding nut and faces the rotatable base. The first driving part is configured to drive the first screw rod to rotate, such that the first screw rod and the first guiding nut move relatively to drive the support arm to raise or lower relative to the rotatable base.

In a second aspect of the present application, a mechanical arm is provided. The mechanical arm includes: the mechanical joint according to any item in the first aspect.

In a third aspect of the present application, a self-moving cleaning device is provided. The self-moving cleaning device includes the mechanical arm according to the second aspect.

### (III) Technical effects

The above technical solutions of the present application have the following technical effects.

In the technical solution of the present application, the first driving part of the mechanical joint is arranged on the support arm, and the first guiding nut is hinged to the rotatable base and is in threaded connection with the first screw rod; and the first driving part drives the first screw rod to rotate relative to the first guiding nut, such that the first screw rod can move relative to the first guiding nut and thus the support arm is raised or lowered relative to the rotatable base; that is, the support arm can be in a folded state or an unfolded state relative to the rotatable base, so as to meet different functional requirements of the mechanical arm. This mechanical joint is simple in structure and convenient to operate, can meet the design requirements of the mechanical arm for a compact structure and small dimensions.

### BRIEF DESCRIPTION OF THE DRAWINGS

By reading the following detailed description of preferred embodiments, various other advantages and benefits will become clear to those of ordinary skill in the art. The accompanying drawings are only for the purpose of illustrating preferred embodiments, but are not considered to be limitations of the present application. Throughout the accompanying drawings, the same reference symbols refer to the same components. In drawings:
FIG. 1 shows a schematic structural diagram of a mechanical arm of a self-moving cleaning device in an unfolded state provided by an embodiment of the present application;
FIG. 2 shows a schematic structural diagram of the mechanical arm of the self-moving cleaning device in a folded state provided by an embodiment of the present application;
FIG. 3 shows a schematic structural diagram of the self-moving cleaning device provided by an embodiment of the present application from another perspective;
FIG. 4 shows a schematic structural diagram of the mechanical arm in the unfolded state provided by an embodiment of the present application from one perspective;
FIG. 5 shows a schematic structural diagram of the mechanical arm in the unfolded state provided by an embodiment of the present application from another perspective;
FIG. 6 shows a schematic structural diagram of the mechanical arm in the folded state provided by an embodiment of the present application from one perspective;
FIG. 7 shows a schematic structural diagram of the mechanical arm in the folded state provided by an embodiment of the present application from another perspective;
FIG. 8 shows a simplified diagram of a mechanism structure of the mechanical arm in the unfolded state provided by an embodiment of the present application;
FIG. 9 shows a schematic structural diagram of the mechanical arm provided in the folded state provided by an embodiment of the present application from yet another perspective;
FIG. 10 shows a schematic structural diagram of the embodiment shown in FIG. 9 from one perspective;
FIG. 11 shows a sectional view of the embodiment shown in FIG. 10 taken along A-A;
FIG. 12 shows a sectional view when a first mechanical joint is assembled with a base and a rotatable base provided by an embodiment of the present application;
FIG. 13 shows a schematic structural diagram when a second mechanical joint is assembled with the rotatable base and a support arm provided by an embodiment of the present application;
FIG. 14 shows a partial schematic structural diagram of the second mechanical joint provided by an embodiment of the present application from one perspective;
FIG. 15 shows a sectional view of the embodiment shown in FIG. 14 taken along B-B;
FIG. 16 shows a schematic structural diagram of the mechanical arm in the unfolded state provided by an embodiment of the present application from yet another perspective;
FIG. 17 shows a sectional view of the embodiment shown in FIG. 16 taken along C-C;
FIG. 18 shows a locally enlarged schematic diagram of Part A in the embodiment shown in FIG. 17;
FIG. 19 shows a sectional view of a third mechanical joint provided by an embodiment of the present application;
FIG. 20 shows a schematic structural diagram of the third mechanical joint provided by an embodiment of the present application from one perspective;
FIG. 21 shows a sectional view when the third mechanical joint is assembled with the support arm and a connecting arm provided by an embodiment of the present application;
FIG. 22 shows a partial schematic structural diagram when the third mechanical joint is assembled with the support arm and the connecting arm provided by an embodiment of the present application;
FIG. 23 shows a schematic structural diagram when a fourth mechanical joint is assembled with a working arm and a mechanical hand provided by an embodiment of the present application from one perspective;
FIG. 24 shows a partial sectional view of the embodiment shown in FIG. 23 taken along D-D from one perspective;
FIG. 25 shows a schematic structural diagram of the mechanical arm in the unfolded state provided by an embodiment of the present application from still yet another perspective;
FIG. 26 shows a locally enlarged schematic diagram of Part B in the embodiment shown in FIG. 25;
FIG. 27 shows a schematic structural diagram of the mechanical hand provided by an embodiment of the present application from one perspective;
FIG. 28 shows a schematic structural diagram of the mechanical hand provided by an embodiment of the present application from another perspective;
FIG. 29 shows a schematic structural diagram of the mechanical hand provided by an embodiment of the present application from yet another perspective;
FIG. 30 shows a schematic structural diagram of the mechanical hand provided by an embodiment of the present application from still yet another perspective;
FIG. 31 shows a locally enlarged schematic diagram of the embodiment shown in FIG. 29 from one perspective;
FIG. 32 shows a locally enlarged schematic diagram of the embodiment shown in FIG. 29 from another perspective;
FIG. 33 shows a locally enlarged schematic diagram of the embodiment shown in FIG. 30 from another perspective;
FIG. 34 shows a schematic exploded view of the embodiment shown in FIG. 33;
FIG. 35 shows a schematic block diagram of a self-moving cleaning device provided by an embodiment of the present application;
FIG. 36 shows a schematic structural diagram of a mechanical hand provided by another embodiment of the present application from one perspective;
FIG. 37 shows a partial schematic structural diagram of the embodiment shown in FIG. 36;
FIG. 38 shows a schematic structural diagram of the mechanical hand provided by another embodiment of the present application from another perspective;
FIG. 39 shows a schematic structural diagram of the mechanical hand provided by another embodiment of the present application from yet another perspective;
FIG. 40 shows a schematic structural diagram of the mechanical hand provided by another embodiment of the present application from still yet another perspective;
FIG. 41 shows a schematic structural diagram of the mechanical hand provided by another embodiment of the present application from still yet another perspective; and
FIG. 42 shows a partial schematic structural diagram of the embodiment shown in FIG. 41.

### Description of the reference signs:

001-mechanical arm;
10-first mechanical joint, 110-second driving part, 120-rotatable joint, 121-rolling assembly, 1211-first rolling assembly, 1212-second rolling assembly, 122-first spacer, 123-pre-tightening assembly, 1231-first adjusting member, 1232-first pre-tightening spacer, 124-sliding sleeve, 130-first synchronizing pulley assembly, 131-first transmission belt, 132-first synchronizing wheel, 133-second synchronizing wheel, 140-first rotation angle detecting apparatus, 141-magnetic induction member, 142-magnetic member, 150-second synchronizing pulley assembly, 151-second synchronizing belt, 160-tensioning apparatus, 161-guiding part, 162-tensioning bearing, 163-adjusting hole, 170-detecting shaft, and 180-fixing frame;
20-second mechanical joint, 210-first guiding nut, 220-first driving part, 230-first screw rod, 231-stepped structure, 232-anti-pulling groove, 240-motor seat, 250-thrust bearing, 260-elastic member, 280- anti-pulling member, 290-limit switch, 291-switch main body, and 292-trigger;
30-third mechanical joint, 310-motor, 311-first output shaft, 312-motor base plate, 313-stator, 314-rotor, 315-motor housing, 316-Hall plate, 317-motor mounting chamber, 320-planetary speed-reducing mechanism, 321-primary gear set, 3211-first sun gear, 3212-first planetary gear, 3213-first planetary rack, 322-secondary gear set, 3221-second sun gear, 3222-second planetary gear, 3223-second planetary rack, 324-speed-reducing mounting chamber, 325-inner gear ring, 326-output end cover, 3261-limit structure, 327-second output shaft, 3271-connecting hole, 3272-first limit surface, 330-first bearing, 340-flange bearing, 350-first connecting member, 351-second head part, 352-second stem part, 360-second pre-tightening spacer, 370-hoop, and 380-second connecting member;
40-fourth mechanical joint, 410-fourth driving part, 411-fourth housing, 412-fourth output shaft, 420-photoelectric sensor, 430-baffle, and 440-bearing apparatus;
50-base, 55-rotatable base, 551-surface, and 552-first rotatable shaft;
60-support arm, 620-first connecting part, and 630-second connecting part;
70-connecting arm, 710-first bent part, and 720-second bent part;
80-working arm, 810-mounting hole, and 820-mounting groove;
90-mechanical hand, 910-fifth driving part, 920-second screw rod, 921-thrust spacer, 930-second guiding nut, 931-cylindrical boss, 940-clamping part, 941-avoidance space, 950-connecting rod mechanism, 951-first rod, 9511-sliding slot, 9512-first hinge point, 9513-second hinge point, 952-second rod, 9521-third hinge point, 9522-fourth hinge point, 953-bent structure, 960-base seat, 961-first cover plate, 962-second cover plate, 970-sixth driving part, 980-transmission mechanism, 981-connecting rod, 982-second rotatable shaft, 983-second screw rod, 984-second guiding nut, 985-connecting block, 986-slider, 990-first imaging apparatus, 991-imaging bracket, 992-camera, 901-connecting shaft, and 911-limit hole;
90'-mechanical hand, 910'-main driving part, 912'-auxiliary gear set, 920'-second screw rod, 930'-second guiding nut, 931'-cylindrical boss, 940'-clamping part, 951'-first rod, 9511'-sliding slot, 9512'-first hinge point, 952'-second rod, 9521'-third hinge point, 9522'-fourth hinge point, 9523'-sliding slot, 953'-first connecting rod mechanism, 954'-second connecting rod mechanism, 955'-main gear set, 960'-base seat, 961'-first cover plate, 962'-second cover plate, 963'-holding groove, 970'-auxiliary driving part, 980'-elastic resetting member, 990'-first imaging apparatus, 991'-imaging bracket, 992'-camera, 993'-avoidance bend, and 901'-connecting shaft; and
002-self-moving cleaning device, 010-device main body, 011-holding chamber, 020-driving wheel, 030-driven wheel, 040-cleaning system, 050-second imaging apparatus, 060-control system, and 070-processing system.

### DETAILED DESCRIPTION

In order to better understand the above-mentioned technical solutions, the technical solutions of the embodiments of the present application are described in detail below with reference to the accompanying drawings and the specific embodiments, and it should be understood that the embodiments of the present application and the specific features in the embodiments are of a detailed description of the technical solutions of the embodiments of the present application, and are not the limitations on the technical solutions of the present application. Without conflict, the embodiments of the present application and the technical features in the embodiments may be combined with each other.

In order to make the objects, technical solutions and advantages of the present application clearer, the following describes the present application in further detail in conjunction with specific embodiments and with reference to the accompanying drawings. It should be understood that these descriptions are exemplary only and are not intended to limit the scope of the present application. Also, in the following description, the descriptions on well-known structures and techniques are omitted to avoid unnecessarily obscuring the concepts of the present application.

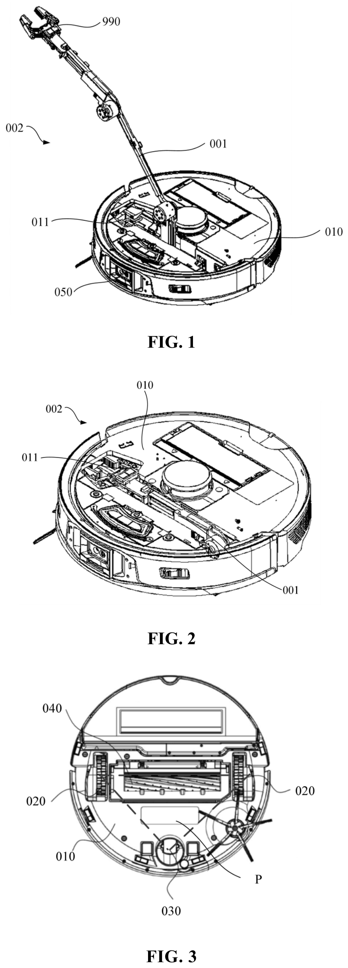

As shown in FIGs. 1 to 35, an embodiment in a first aspect of the present application provides a mechanical joint (a second mechanical joint 20 as mentioned hereinafter), an embodiment in a second aspect of the present application provides a mechanical arm 001, and an embodiment in a third aspect of the present application provides a self-moving cleaning device 002. The self-moving cleaning device 002 may be a sweeping robot, a sweeping and mopping integrated machine, or a further self-moving cleaning device 002 that meets the requirements.

Specifically, the self-moving cleaning device 002 includes, but is not limited to: a device main body 010, a cleaning system, a driving system, a perception system, a control module, an energy system and a human-computer interaction system, etc. The respective systems above coordinate with each other, such that the self-moving cleaning device 002 can move autonomously to achieve a cleaning function. In the cleaning device, functional elements and the like that constitute the above-mentioned systems are integrated in the device main body 010.

Further, the mechanical joint is applicable to a mechanical arm 001, the mechanical arm 001 includes a rotatable base 55 and a support arm 60, the support arm 60 is hinged to the rotatable base 55, and the mechanical joint (such as the second mechanical joint 20) is used to raise or lower the support arm 60 relative to the rotatable base 55, such that other operating mechanisms connected to the support arm 60 can meet the operational needs at different positions, thereby expanding the operational range of the product. The mechanical arm 001 is applicable to the self-moving cleaning device 002, e.g., the mechanical arm 001 is connected to the device main body 010 of the self-moving cleaning device 002 to achieve the grasping or moving of obstacles, articles and garbage near the self-moving cleaning device 002, thereby better achieving an autonomous cleaning function.

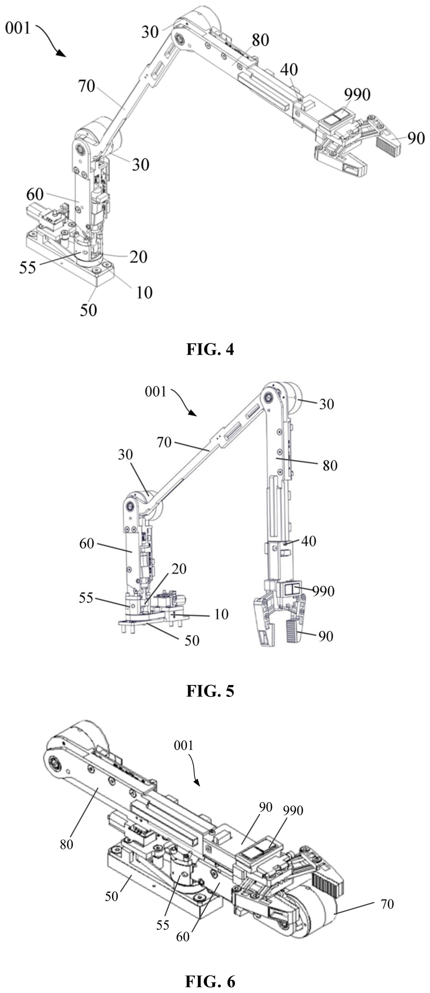

As shown in FIGs. 4, 5, 6, and 8, in some possible embodiments provided in the present application, the mechanical arm 001 includes: a base 50, a rotatable base 55, a support arm 60, a connecting arm 70, a working arm 80, and a mechanical hand 90. The base 50 is connected to the interior of a holding chamber 011, that is, the entire mechanical arm 001 is mounted in the holding chamber 011 through the base 50 and a mounting structure arranged in the holding chamber 011, so as to be fixed to the device main body 010. Specifically, the mounting structure may be a mounting seat, a mounting hole, a slot, or a further structure. That is, the base 50 may be fixed in the holding chamber 011 through screws, slots and hooks, or other structures that meet the requirements.

Further, the rotatable base 55 is connected to the base 50 through a first mechanical joint 10, such that the rotatable base 55 is rotatable relative to the base 50. The support arm 60 is connected to the rotatable base 55 through a second mechanical joint 20, such that the support arm 60 can be folded or unfolded relative to the rotatable base 55. For example, the support arm 60 can be raised or lowered relative to the rotatable base 55. A first end of the connecting arm 70 is connected to the support arm 60 through a third mechanical joint 30, such that the connecting arm 70 can be folded or unfolded relative to the support arm 60. For example, the connecting arm 70 can be raised or lowered relative to the support arm 60. A second end of the connecting arm 70 is connected to a working arm 80 through another third mechanical joint 30, such that the working arm 80 can be folded or unfolded relative to the connecting arm 70. That is, the working arm 80 can be raised or lowered relative to the connecting arm 60. The working arm 80 is connected to the mechanical hand 90 through a fourth mechanical joint 40, such that the mechanical hand 90 can rotate relative to the working arm 80.

That is to say, the mechanical arm 001 provided by the embodiment of the present application adopts five-degree-of-freedom, three-arm-segment foldable design. Therefore, the motion range of the mechanical arm 001 can be increased, a cleaning range of the self-moving cleaning device 002 is further increased, and hence an operational range of the product is expanded. Meanwhile, the foldable design makes the mechanical arm 001 highly space-efficient (that is, the folded mechanical arm 001 has smaller dimensions), thereby achieving effortless storage.

The first mechanical joint 10 can be understood as a waist rotating joint, the second mechanical joint 20 can be understood as a waist raising/lowering joint, the two third mechanical joints 30 can be shoulder and elbow joints that can be raised and lowered, respectively, and the fourth mechanical joint 40 is a rotatable wrist joint.

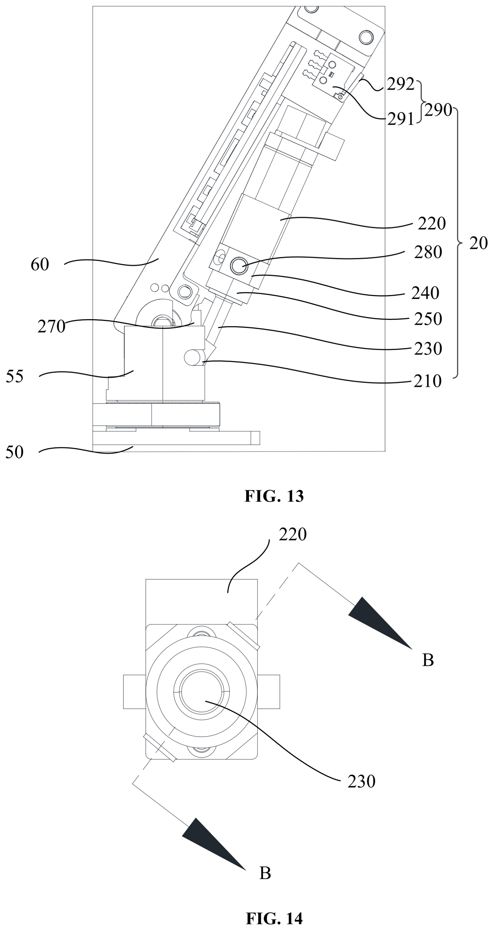

Specifically, as shown in FIGs. 13, 14 and 15, the embodiment in the first aspect of the present application provides a mechanical joint, which corresponds to the second mechanical joint 20 hereinabove for connecting the support arm 60 and the rotatable base 55 of the mechanical arm 001. The support arm 60 is hinged to the rotatable base 55; and with the second mechanical joint, the support arm 60 is raised or lowered relative to the rotatable base 55. The mechanical joint includes: a first guiding nut 210, a first screw rod 230 and a first driving part 220. The first guiding nut 210 is in threaded connection with the first screw rod 230 and hinged to the rotatable base 55; the first driving part 220 is arranged on the support arm 60, a first end of the first screw rod 230 is connected to the first driving part 220, and a second end of the first screw rod 230 passes through the first guiding nut 210 and faces the rotatable base 55. The first driving part 220 is used for driving the first screw rod 230 to rotate, such that the first screw rod 230 and the first guiding nut 210 move relatively to drive the support arm 60 to raise or lower relative to the rotatable base 55.

The first driving part 220 may be a motor, and an output shaft of the motor is connected to the first screw rod 230. For example, the output shaft of the first driving part 220 is connected to the first screw rod 230 through an adhesive. It can be understood that the output shaft of the first driving part 220 and the first screw rod 230 can also be connected through keys or other means. The output shaft of the first driving part 220 rotates to drive the first screw rod 230 to rotate, such that the first guiding nut 210 and the first screw rod 230 can move relatively. Because the first guiding nut 210 is hinged to the rotatable base 55 and the first driving part 220 is arranged on the support arm 60, the first screw rod 230 can move close to or away from the rotatable base 55 relative to the first guiding nut 210, and then the support arm 60 can be raised or lowered relative to the rotatable base 55.

That is to say, according to the second mechanical joint 20 provided in the embodiment of the present application, the first driving part 220 is arranged on the support arm 60, and the first guiding nut 210 is hinged to the rotatable base 55 and is in threaded connection with the first screw rod 230. The first driving part 220 drives the first screw rod 230 to rotate relative to the first guiding nut 210, such that the first screw rod 230 can move relative to the first guiding nut 210, and then the support arm 60 is raised or lowered relative to the rotatable base 55. That is, the support arm 60 can be in a folded state or an unfolded state relative to the rotatable base 55, so as to meet different functional requirements of the mechanical arm 001.

It can be understood that when the support arm 60 is in the folded state relative to the rotatable base 55, for example, the support arm 60 is in a horizontal position, that is, when the support arm 60 is in a zero-position state, the mechanical arm 001 may be in a storage position without working, so as to reduce a space occupied by the mechanical arm 001; and when the support arm 60 is in the unfolded state relative to the rotatable base 55, for example, the support arm 60 is unfolded to a vertical position relative to the rotatable base 55, the mechanical arm 001 may be in an unfolded state to perform operations. Through the cooperation of the first driving part 220, the first screw rod 230 and the first guiding nut 210, the support arm 60 can be raised or lowered relative to the rotatable base 55, thereby achieving a simple structure and convenient operation, and meeting the design requirements of the mechanical arm 001 for the compact structure and smaller dimensions.

Further, the support arm 60 is hinged to the rotatable base 55, and the first guiding nut 210 is hinged to the rotatable base 55, such that the first guiding nut 210 and the rotating seat 55 do not interfere with each other when the first driving part 220 drives the first screw rod 230 to rotate relative to the first guiding nut 210 to drive the support arm 60 to be raised or lowered relative to the rotatable base 55. That is, the first guiding nut 210 can rotate relative to the rotatable base 55 to ensure that the first screw rod 230 moves, relative to the first guiding nut, within a certain range, which matches a rotation range of the support arm 60 relative to the rotatable base 55.

It can be understood that a rotation angle of the first guiding nut 210 relative to the rotatable base 55 needs to be greater than or equal to a rotation range of the support arm 60 relative to the rotatable base 55 so as to meet the use requirements of the mechanical arm 001. For example, the rotation range of the first guiding nut 210 relative to the rotatable base 55 may be 90° to 360°, or other ranges that meet the requirements.

Specifically, a first cylindrical boss is arranged on a side of the first guiding nut 210 facing the rotatable base 55, and the first guiding nut 210 is hinged to the rotatable base 55 through the first cylindrical boss. Such an arrangement makes the rotation range of the first guiding nut 210 relative to the rotatable base 55 up to 360°, and thus can meet the demand that the support arm 60 has a relatively large raising range relative to the rotatable base 55 and expand the operational range of the product. In addition, the first cylindrical boss is simple in structure, and thus it is convenient to process and assemble, and relatively low in cost.

In some possible embodiments provided in the present application, as shown in FIG. 13, the second mechanical joint 20 further includes a motor seat 240. The motor seat 240 is hinged to the support arm 60. That is, the motor seat 240 can rotate relative to the support arm 60, the first driving part 220 is mounted on the motor seat 240, and the first screw rod 230 is inserted into the motor seat 240 and connected to the first driving part 220. Such an arrangement makes the first driving part 220 connected to the first screw rod 230 not interfere with the support arm 60 when the support arm 60 is raised or lowered relative to the rotatable base 55, and then ensures that the first screw rod 230 can move smoothly relative to the first guiding nut 210 without getting stuck, and further improve the operational reliability and smoothness of the second mechanical joint 20.

Specifically, a second cylindrical boss is arranged on a side of the motor seat 240 facing the support arm 60, and the motor seat 240 is hinged to the support arm 60 through the second cylindrical boss. Such an arrangement makes the rotation range of the motor seat 240 relative to the support arm 60 up to 360°, and thus can meet the demand that the support arm 60 has a relatively large raising range relative to the base 50. In addition, the second cylindrical boss is simple in structure, and thus it is convenient to process and assemble, and relatively low in cost.

That is to say, according to the second mechanical joint 20 provided by the embodiment of the present application, the support arm 60 is hinged to the rotatable base 55, the first guiding nut 210 is hinged to the rotatable base 55, and the motor seat 240 is hinged to the support arm 60, so a movable triangular structure is formed. The first screw rod 230 is connected to the first driving part 220 and passes through the first guiding nut 210, such that the first driving part 220 drives the first screw rod 230 to rotate, and then the first screw rod 230 can move relative to the first guiding nut 210, so as to realize the raising or lowering of the support arm 60 relative to the rotatable base 55, achieving a simple structure.

In some possible embodiments provided in the present application, as shown in FIGs. 13, 14 and 15, the second mechanical joint 20 further includes a thrust bearing 250. The first screw rod 230 is sleeved with the thrust bearing 250, the first screw rod 230 is provided with a first stepped structure 231, and the thrust bearing 250 is located between the first stepped structure 231 and the motor seat 240, such that the first screw rod 230 is rotatably connected to the motor seat 240. Such an arrangement ensures that axial thrust of the first screw rod 230 is supported by the motor seat 240, and is then conducive to prolonging the service life of the first screw rod 230, and improving the reliability of the mechanical joint.

In some possible embodiments provided in the present application, as shown in FIG. 13, the second mechanical joint 20 further includes an elastic member 260. The elastic member 260 is connected to the rotatable base 55 and the support arm 60, and the elastic member 260 is used for applying a thrust force to the support arm 60 in a direction toward the rotatable base 55.

Due to the arrangement of the elastic member 260, the support arm 60 has a pre-tightening force for turning it toward the rotatable base 55. As shown in FIG. 13, the elastic member 260 makes the support arm 60 have a downward (clockwise as shown in FIG. 13) pre-tightening force, thereby eliminating clearance in a triangular structure formed by hinging the support arm 60 to the rotatable base 55, hinging the first guiding nut 210 to the rotatable base 55, and hinging the motor seat 240 to the support arm 60, reducing the wobbling during the raising or lowering of the support arm 60 relative to the rotatable base 55, and improving the operational stability and reliability of the second mechanical joint 20.

Specifically, the elastic member 260 may be a torsion spring. It can be understood that the elastic member 260 may also be of other structures that meet the requirements. One end of the torsion spring is connected to the rotatable base 55, and the other end of the torsion spring is connected to the support arm 60. For example, both ends of the torsion spring are hooked on the rotatable base 55 and the support arm 60, respectively.

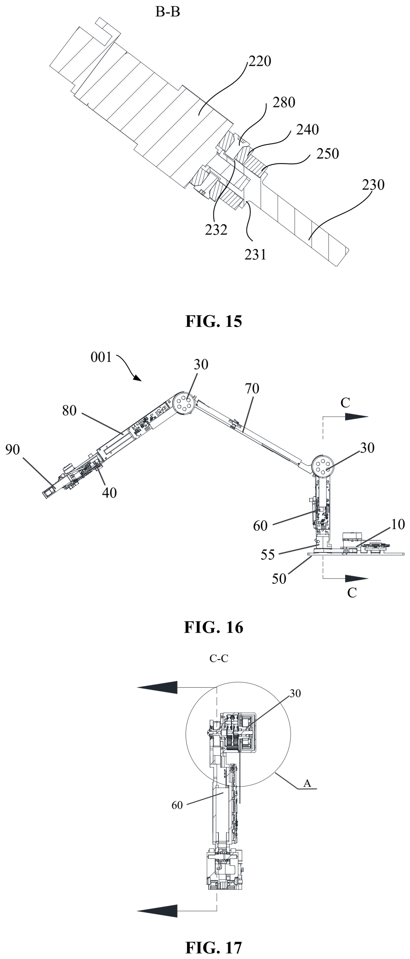

In some possible embodiments provided in the present application, as shown in FIG. 15, the second mechanical joint 20 further includes an anti-pulling member 280. The first screw rod 230 is provided with an anti-pulling groove 232 located inside the motor seat 240, and the anti-pulling member 280 is connected to the motor seat 240 and extends into the anti-pulling groove 232. Due to the arrangement of the anti-pulling member 280, the first driving part 220 is well protected, which is conducive to prolonging the service life of the first driving part 220.

Further, a gap is arranged between the anti-pulling member 280 and the anti-pulling groove 232, that is, there is a gap between the anti-pulling member 280 and each of two side walls and a bottom wall of the anti-pulling groove 232.

Such an arrangement makes the first screw rod 230 not contact with the anti-pulling member 280 under the condition of normal operation, that is, the anti-pulling member 280 does not hinder the normal rotation of the first screw rod 230, and then ensures the operational reliability of the second mechanical joint 20.

The distance between the anti-pulling member 280 and a groove wall on a side of the anti-pulling groove 232 close to the first driving part 220 is less than an axial play of an output shaft of the first driving part 220. By means of such an arrangement, when the first screw rod 230 is pulled, for example, when the support arm 60 is used in an abnormal use scene, e.g., when the support arm 60 is manually raised, the output shaft of the first driving part 220 is pulled out within its axial play range. The anti-pulling member 280 is in contact with the groove wall on the side of the anti-pulling groove 232 close to the first driving part 220, such that a pulling force is applied to the anti-pulling member 280, and the output shaft of the first driving part 220 is not subject to an axial force at this time, thereby protecting the first driving part 220, being conducive to prolonging the service life of the first driving part 220, reducing a failure rate of the second mechanical joint 20, and prolonging the service life of the second mechanical joint 20.

In the above embodiment, the anti-pulling member 280 is an anti-pulling bolt, and the anti-pulling groove 232 is an annular groove. The anti-pulling bolt is a standard relatively-low-cost part that facilitates connection with the motor seat 240, thereby achieving simple assembly. The anti-pulling groove 232 is an annular groove which is convenient to process, and thus conducive to reducing the processing cost.

In some possible embodiments provided in the present application, as shown in FIG. 13, the second mechanical joint 20 further includes a limit switch 290. The limit switch 290 is arranged on the support arm 60, and the first driving part 220 rotates or stops rotating according to the trigger of the limit switch 290. When the support arm 60 rotates to a first preset position, the limit switch 290 is triggered.

The first preset position may be that the support arm 60 is in a zero-position state. For example, when the support arm 60 is in a horizontal position, if the support arm 60 continues to rotate towards the rotatable base 55, for example, continues to rotate downward, the hinging stability between the support arm 60 and the rotatable base 55, the hinging stability between the first guiding nut 210 and the rotatable base 55, and the connecting stability between the first screw rod 230 and the first driving part 220 will be compromised, which further easily causes the failure of the second mechanical joint 20. Therefore, when the support arm 60 rotates to the first preset position, the limit switch 290 arranged on the support arm 60 is triggered, and the first driving part 220 is controlled to stop rotating according to a trigger signal of the limit switch 290. This can avoid the failure of the second mechanical joint 20 caused by continuous operation of the first driving part 220, further well protects the mechanical joint, and contributes to prolonging the service life of the mechanical joint, thereby improving the reliability of the mechanical arm 001.

It can be understood that when the support arm 60 does not rotate to the first preset position, that is, when the support arm 60 is in an inclined or vertical state, the limit switch 290 is not triggered, and the first driving part 220 does not receive the trigger signal of the limit switch 290. Therefore, the first driving part 220 can be controlled to continue rotating according to other control programs.

In the above embodiment, as shown in FIG. 13, the limit switch 290 includes a switch main body 291 and a trigger 292, the switch main body 291 is arranged on one side of the support arm 60, one end of the trigger 292 is connected with the switch main body 291 and the other end of the trigger 292 extends away from the switch main body 291, that is, the other end of the trigger 292 extends outward from the surface of the support arm 60 where the switch main body 291 is located. When the support arm 60 rotates to the first preset position, for example, when the support arm 60 rotates to the horizontal position, i.e., to be in the zero-position state, relative to the rotatable base 55, the other end of the trigger 292 is suitable for abutting against a foreign object and contacting with the switch main body 291 to trigger the limit switch 290.

It can be understood that the foreign object may be other structures than the second mechanical joint 20 per se, for example, the foreign object may be other structures of the mechanical arm 001, or the foreign object may also be a structure arranged in a holding chamber 011 of the device main body 010 of the self-moving cleaning device 002. Specifically, the foreign object may be a housing of the first driving part. When the support arm 60 rotates to the first preset position, that is, the support arm 60 is horizontally placed, i.e., in the zero-position state, it can be understood that the switch main body 291 is arranged on one side at the bottom of the support arm 60 when the support arm 60 is in the first position, such that the end of the trigger 292 away from the switch main body 291 can be abutted against the foreign object and in contact with the switch main body 291 to trigger the limit switch 290. Thus, the first driving part 220 can stop working according to the trigger signal of the limit switch 290 to prevent the support arm 60 from continuing downward movement that could damage the second mechanical joint 20, thereby protecting the mechanical arm 001.

In some possible embodiments provided in the present application, the second mechanical joint 20 further includes a first rotation angle detecting apparatus, the first rotation angle detecting apparatus is arranged on the first driving part 220 for detecting a rotation angle of the output shaft of the first driving part 220, and the first driving part 220 also rotates or stops rotating according to a detection result of the first rotation angle detecting apparatus. Thus, the support arm 60 can be flexibly controlled to rotate relative to the rotatable base 55 to any required angular position, to meet the requirements of different working conditions of the mechanical arm 001 and expand the operational range of the product.

Specifically, a mechanical self-locking structure may be arranged on the second mechanical joint 20. When the support arm 60 rotates to a vertical position relative to the rotatable base 55, the mechanical self-locking structure acts to lock the support arm 60 at this position relative to the rotatable base 55. At the same time, the first driving part 220 may be powered off to remove the power consumed by the second mechanical joint 20 when the mechanical arm 001 is loaded.

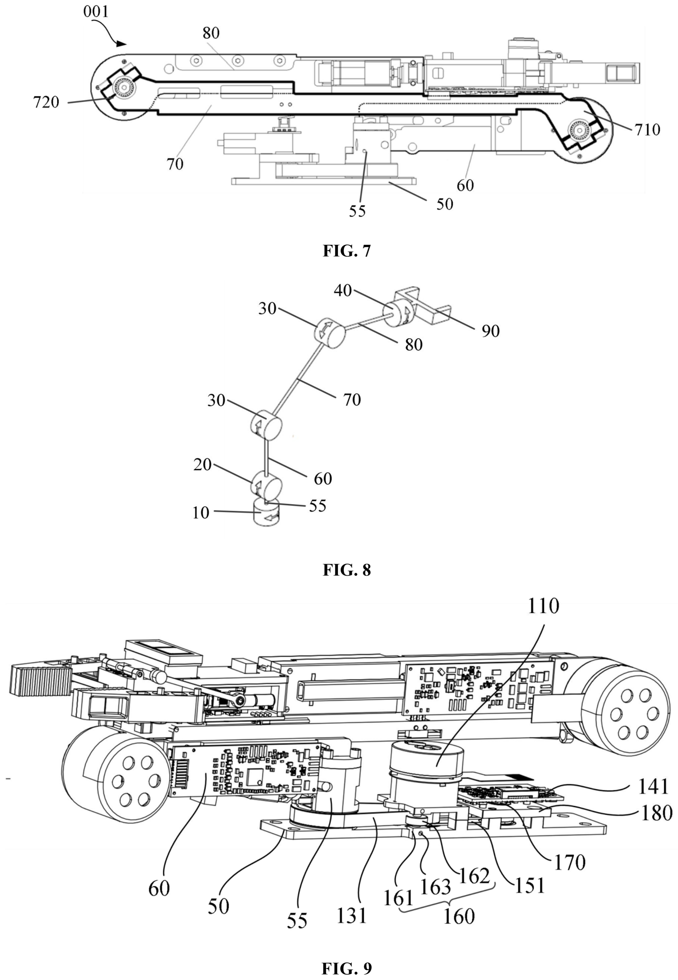

As shown in FIGs. 9, 10, 11 and 12, in some possible embodiments provided in the present application, the first mechanical joint 10 includes a second driving part 110, a rotatable joint 120 and a first transmission assembly 130. The second driving part 110 may be arranged on the base 50, the first transmission assembly 130 is used for transmission connection of the second driving part 110 and the rotatable joint 120, the rotatable joint 120 is movably connected with the rotatable base 55, and the second driving part 110 is used for driving the rotatable joint 120 to rotate by the first transmission assembly 130, such that the rotatable base 55 rotates relative to the base 50.

For the first mechanical joint 10 provided in the present application, the first transmission assembly 130 may be a belt transmission assembly, a rack-and-pinion transmission assembly, or other transmission assemblies that meet the requirements. The first transmission assembly 130 is used for changing the transmission direction of an output force of the second driving part 110. Since the first transmission assembly 130 is used for transmission connection of the second driving part 110 and the rotatable joint 120, the power of the second driving part 110 is changed in direction by the first transmission assembly 130 and then transmitted to the rotatable joint 120, and the rotatable base 55 is driven to rotate relative to the base 50 by the rotatable joint 120. Such an arrangement can reduce the overall height and overall dimension of the mechanical arm 001 compared with the traditional way in which the second driving part directly drives the rotatable base to rotate in the related art, and can meet the design requirements of the mechanical arm 001 for the compact structure and smaller dimensions.

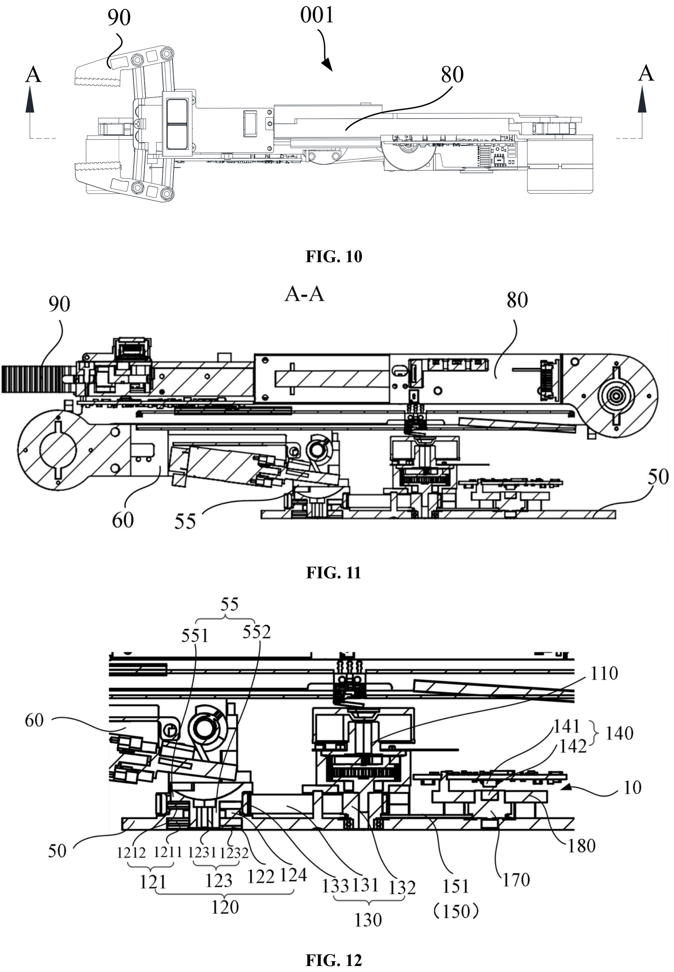

As shown in FIGs. 9 and 12, in some possible embodiments provided in the present application, the first transmission assembly 130 includes a first synchronizing wheel 132 and a second synchronizing wheel 133 which are in transmission connection through a first transmission belt 131. The first synchronizing wheel 132 is connected with the second driving part 110, the second synchronizing wheel 133 is connected with the rotatable base 55, and the rotatable base 55 is movably connected with the base 50 through the rotatable joint 120.

The second driving part 110 may be a motor, the second driving part 110 is mounted on the base 50, and the first synchronizing wheel 132 is connected with an output shaft of the motor. Thus, the second driving part 110 works to drive the first synchronizing wheel 132 to rotate, and the second synchronizing wheel 133 is driven to rotate by the first transmission belt 131. Since the rotatable base 55 is movably connected with the base 50 through the rotatable joint 120, the rotatable base 55 can be driven to rotate relative to the base 50. Since the first synchronizing wheel 132 and the second synchronizing wheel 133 are arranged in parallel, that is, the two synchronizing wheels of the first transmission assembly 130 are arranged in parallel, the second driving part 110 and the rotatable base 55 can be arranged relatively in parallel. Compared with the related art in which the second driving part directly drives the rotatable base 55, which requires the second driving part and the rotatable base 55 to be arranged in sequence in the axial direction, such an arrangement can shorten the axial distance of the whole mechanical arm 001, and thus can meet the design requirements of the mechanical arm 001 for the compact structure and smaller dimensions and expand the operational range of the product.

As shown in FIG. 12, in some possible embodiments provided in the present application, the rotatable joint 120 includes a rolling assembly 121 located between the rotatable base 55 and the base 50. The rolling assembly 121 includes a ball or a rolling needle, that is, the rotatable base 55 is connected with the base 50 in a rolling way. Due to such an arrangement of the rolling assembly 121, the rotatable joint can bear an axial load during rotating, which is further conducive to improving the reliability of the product. Specifically, the rolling assembly 121 is a thrust bearing apparatus.

As shown in FIG. 12, in some possible embodiments provided in the present application, the rotatable base 55 includes a first rotatable shaft 552 inserted into the base 50 and a surface 551 located at the upper part of the first rotatable shaft 552. The rolling assembly 121 sleeves the first rotatable shaft 552 of the rotatable base 55, and the second synchronizing wheel 133 is connected with the surface 551. The rolling assembly 121 includes a first rolling assembly 1211 and a second rolling assembly 1212 which are distributed at two opposite ends of the base 50. The two opposite surfaces of the base 50 are in rolling contact with the first rolling assembly 1211 and the second rolling assembly 1212 respectively.

In this embodiment, the first rolling assembly 1211 and the second rolling assembly 1212 match to form a bearing apparatus. Thus, the second driving part 110 works to drive the first synchronizing wheel 132 to rotate, and the second synchronizing wheel 133 can be driven to rotate through the first transmission belt 131. Since the base 50 and the first rotatable shaft 552 of the rotatable base 55 are connected in a rolling way through the first rolling assembly 1211 and the second rolling assembly 1212, the rotatable base 55 can further rotate relative to the base 50.

Specifically, the first rolling assembly 1211 and the second rolling assembly 1212 may be balls or rolling needles, and two rolling assemblies 121 match to form the bearing apparatus. Specifically, the two rolling needle or ball assemblies match to form a thrust bearing. The two opposite surfaces of the base 50 are in rolling contact with the first rolling assembly 1211 and the second rolling assembly 1212 respectively, that is, the first rolling assembly 1211 and the second rolling assembly 1212 are in direct contact with the base 50.

The traditional bearings include the balls or rolling needles and upper and lower spacers per se, but for the first mechanical joint 10 provided by the embodiment of the present application, the first rolling assembly 1211 and the second rolling assembly 1212 are in rolling contact with the two opposite surfaces of the base 50 respectively, such that the arrangement of the spacer between the first rolling assembly 1211 and the base 50 and the spacer between the second rolling assembly 1212 and the base 50 is simplified, which can further reduce the axial height of the mechanical joint, can meet the design requirements of the mechanical joint for the compact structure and smaller dimensions and can thus further meet the design requirements of the mechanical arm 001 for the compact structure and smaller dimensions.

In the above embodiment, as shown in FIGs. 10 and 12, the surface 551 of the rotatable base 55 is located outside the base 50. For example, the surface 551 of the rotatable base 55 is located above the base 50, and the end of the second rolling assembly 1212 away from the first rolling assembly 1211 is in rolling contact with the side of the surface 551 towards the base 50, that is, the second rolling assembly 1212 is located above the first rolling assembly 1211. The two end surfaces. i.e., upper and lower end surfaces, of the second rolling assembly 1212 are in rolling contact with the surface 551 of the rotatable base 55 and the base 50 respectively, that is, the surface 551 of the rotatable base 55 and the base 50 are directly used as two spacers, i.e., upper and lower spacers of the second rolling assembly 1212. Compared with the traditional bearing, such an arrangement simplifies the arrangement of the two spacers, i.e., upper and lower spacers, of the second rolling assembly 1212, which can further reduce the axial height of the rotatable joint 120 and thus the axial height of the mechanical joint, and can further meet the design requirements of the mechanical joint for the compact structure and smaller dimensions.

As shown in FIG. 12, in some possible embodiments provided in the present application, the rotatable joint 120 further includes a first spacer 122 and a pre-tightening assembly 123. One end of the first rolling assembly 1211 away from the second rolling assembly 1212 is in rolling contact with the first spacer 122; the pre-tightening assembly 123 is used for adjusting the distance between the first rolling assembly 1211 and the second rolling assembly 1212 through the first spacer 122.

In the present embodiment, the two end surfaces. i.e., upper and lower end surfaces of the first rolling assembly 1211 are in rolling contact with the base 50 and the first spacer 122 respectively, and the pre-tightening assembly 123 can adjust the distance between the first rolling assembly 1211 and the second rolling assembly 1212 through the first spacer 122, which can further tighten the first rolling assembly 1211 and the second rolling assembly 1212. Thus, the rigidity of the first mechanical joint 10 is greatly improved in a limited space.

In the above embodiment, as shown in FIG. 10, the pre-tightening assembly 123 includes a first adjusting member 1231 and a first pre-tightening spacer 1232. The first pre-tightening spacer 1232 is located on the side of the first spacer 122 away from the first rolling assembly 1211, and the first adjusting member 1231 penetrates the first pre-tightening spacer 1232 to be movably connected with the first rotatable shaft 552 of the rotatable base 55. The rotation of the first adjusting member 1231 can drive the first pre-tightening spacer 1232 to move vertically relative to the first rotatable shaft 552 of the rotatable base 55, so as to adjust the distance between the first rolling assembly 1211 and the second rolling assembly 1212.

For example, the first adjusting member 1231 includes a first stem part and a first head part, if the first adjusting member 1231 is a bolt, the bottom of the first rotatable shaft 552 of the rotatable base 55 is provided with a threaded hole, the first stem part penetrates the first pre-tightening spacer 1232 to be in threaded connection with the threaded hole of the first rotatable shaft 552, the first head part is clamped on the side of the first pre-tightening spacer 1232 away from the first spacer 122, and the first spacer 122 is located between the first pre-tightening spacer 1232 and the first rolling assembly 1211. Thus, by rotating the first adjusting member 1231, the first pre-tightening spacer 1232 can move vertically along the first rotatable shaft 552 along with the first adjusting member 1231. Thus, the first rolling assembly 1211 can be pushed to move close to or away from the second rolling assembly 1212 by the first spacer 122, which can further adjust the distance between the first rolling assembly 1211 and the second rolling assembly 1212 and further tighten the first rolling assembly 1211 and the second rolling assembly 1212.

In some possible embodiments provided in the present application, as shown in FIG. 10, the rotatable joint 120 further includes a sliding sleeve 124. Specifically, the sliding sleeve 124 may be a copper sleeve or other structures that meet the requirements. The sliding sleeve 124 sleeves the first rotatable shaft 552 of the rotatable base 55, is located between the first rolling assembly 1211 and the second rolling assembly 1212, and is accommodated in a first mounting groove arranged on a side of the base 50 facing the first rolling assembly 1211. By arranging the sliding sleeve 124, it can bear a radial force, which is conducive to improving the reliability of the rotatable joint 120.

That is to say, the first mechanical joint 10 is constrained by three bearings, specifically the thrust rolling needle bearing of the first rolling assembly 1211, the thrust rolling needle bearing of the second rolling assembly 1212 and the sliding bearing of the sliding sleeve 124. Thus, the rotatable joint 120 can bear both the axial force and the radial force, thereby greatly improving the reliability of the rotatable joint 120.

In some possible embodiments provided in the present application, as shown in FIGs. 9 and 12, the first mechanical joint 10 further includes a detecting shaft 170, a first rotation angle detecting apparatus 140 and a second synchronizing pulley assembly 150. The detecting shaft 170 is rotatably arranged on the base 50, for example, the detecting shaft 170 may be arranged parallel to an output shaft of the second driving part 110, the second synchronizing pulley assembly 150 is used for transmission connection of the detecting shaft 170 and the output shaft of the second driving part 110, and the first rotation angle detecting apparatus 140 is used for detecting a rotation angle of the detecting shaft 170.

Since the second synchronizing pulley assembly 150 is used for transmission connection of the detecting shaft 170 and the output shaft of the second driving part 110, the rotation angle of the output shaft of the second driving part 110 can be known by detecting the rotation angle of the detecting shaft 170 through the first rotation angle detecting apparatus 140, thereby achieving measurement of the rotation angle of the output shaft of the second driving part 110. In addition, the detecting shaft 170 and the output shaft of the second driving part 110 are arranged relatively parallel to each other, and the first rotation angle detecting apparatus 140 is arranged on the detecting shaft 170. Compared with the related art in which the first rotation angle detecting apparatus is directly arranged on the upper part of the second driving part to detect the rotation angle of the output shaft of the second driving part, such an arrangement reduces the axial height of the second driving part 110, such that the axial height of the first mechanical joint 10 is further reduced, the axial height of the whole mechanical arm 001 is thus reduced, and the design requirements of the mechanical joint for the compact structure and smaller dimensions can be met.

That is to say, for the first mechanical joint 10 provided by the embodiment of the present application, the first rotation angle detecting apparatus is moved from the vertical upper part of the output shaft of the second driving part to the detecting shaft 170 arranged parallel to the second driving part in the horizontal direction in order to solve the problem that the overall height of the driving part is larger since the first rotation angle detecting apparatus is arranged on the second driving part in the traditional mechanical joint, and the detecting shaft 170 is in transmission connection with the output shaft of the second driving part 110 through the second synchronizing pulley assembly 150. Thus, the rotation angle of the output shaft of the second driving part 110 can be measured, and moreover, the overall height of the first mechanical joint 10 is reduced.

In the above embodiment, as shown in FIGs. 9 and 10, the first mechanical joint 10 further includes a fixing frame 180, and the fixing frame 180 is connected with the base 50 and erected around the detecting shaft 170. The second synchronizing pulley assembly 150 includes a third synchronizing wheel and a fourth synchronizing wheel which are connected through a second transmission belt 151, and the third synchronizing wheel is connected with the output shaft of the second driving part 110, that is, the third synchronizing wheel and the first synchronizing wheel 132 are coaxially arranged. The fourth synchronizing wheel is connected with the detecting shaft 170. It can be understood that the fourth synchronizing wheel may be located inside the fixing frame 180. The first rotation angle detecting apparatus 140 includes a magnetic induction member 141 and a magnetic member 142. The magnetic induction member 141 is arranged on the fixing frame 180 and the magnetic member 142 is arranged on the detecting shaft 170. Thus, the rotation of the output shaft of the second driving part 110 drives the third synchronizing wheel to rotate, and thus drives the fourth synchronizing wheel to rotate by the second transmission belt 151, which can further drive the detecting shaft 170 and the magnetic member 142 on the detecting shaft 170 to rotate. The magnetic induction member 141 can measure the rotation angle of the detecting shaft 170 according to the induced position change of the magnetic member 142, which achieves a simple structure and easy implementation.

Specifically, the detecting shaft 170 and the rotatable base 55 may be distributed on two opposite sides of the second driving part 110. Thus, the space and structure of the base 50 can be reasonably utilized, and the design requirements of the mechanical arm 001 for the compact structure and smaller dimensions are realized.

Specifically, the magnetic member 142 is a magnet, the magnetic induction member 141 is a Hall sensor, and the magnetic member 142 is fixed on the detecting shaft 170 by means of an adhesive, a slot, etc.

In some possible embodiments provided in the present application, as shown in FIG. 9, the first mechanical joint 10 further includes a tensioning apparatus 160, and the tensioning apparatus 160 is used for adjusting the tensioning degree of the first transmission belt 131 in the first transmission assembly 130, so as to improve the transmission efficiency and accuracy of the first transmission assembly 130 and improve the accuracy of the rotation of the rotatable base 55 relative to the base 50.

In the above embodiment, the tensioning apparatus 160 includes a guiding part 161, a tensioning shaft and a second adjusting member. The guiding part 161 may be arranged on the base 50 to reasonably use the structure of the base 50. The inner bottom of the guiding part 161 is provided with a sliding slot 9511, and the tensioning shaft is inserted into the guiding part 161, for example, the tensioning shaft is inserted into the guiding part 161 from above, and the end part of the tensioning shaft is located in the sliding slot 9511 and may slide towards or away from the first transmission belt 131 along the sliding slot. The part of the tensioning shaft outside the guiding part 161 is provided with a tensioning bearing 162 connected with the first transmission belt 131. The second adjusting member is inserted into an adjusting hole 163 of the guiding part 161 and abutted against the tensioning shaft. By adjusting the connection position between the second adjusting member and the guiding part 161, the position of the tensioning shaft in the sliding slot can be adjusted, and thus the tensioning operation can be performed on the first transmission belt 131.

The second adjusting member may be a bolt, the side surface of the guiding part 161 is provided with the adjusting hole 163, and the adjusting hole 163 is a threaded hole. The second adjusting member is connected with the threaded hole and can be abutted against the tensioning shaft located in the guiding part 161. By screwing the second adjusting member, the tensioning shaft can be moved close to or away from the first transmission belt 131; and since the first transmission belt 131 and the tensioning shaft are rotatably connected through the tensioning bearing 162, the tensioning operation can be performed on the first transmission belt 131, thereby achieving a simple structure and easy operation.

As shown in FIGs. 16, 17, 18, 19, 20, 21, and 22, in some possible embodiments provided in the present application, the third mechanical joint 30 includes: a third driving part connected to a first arm; the third driving part includes a motor 310 and a planetary speed-reducing mechanism 320; the motor 310 includes a first output shaft 311; an input end of the planetary speed-reducing mechanism 320 is connected to the first output shaft 311; and an output end of the planetary speed-reducing mechanism 320 is connected to a second arm to drive the second arm to rotate relative to the first arm. The first arm is the connecting arm 70, both ends of which are connected to the output end of the planetary speed-reducing mechanism 320, and the second arm is either the support arm 60 or the working arm 80.

That is, a brushless servo speed-reducing motor is used as the third driving part of the third mechanical joint 30, a speed-reducing gearbox is the planetary speed-reducing mechanism 320, which is used to connect the motor 310 and the second arm to transmit the power of the motor 310 to the second arm after speed reduction, so as to drive the second arm to rotate relative to the first arm. That is, the third mechanical joint 30 provided in the present application is a rotatable mechanical joint. The third mechanical joints 30 are connected at both ends of the connecting arm 70 to achieve the rotatable connection between the connecting arm 70 and the support arm 60 and between the connecting arm 70 and the working arm. Specifically, both ends of the connecting arm 70 are connected to the support arm 60 and the working arm 80 through the third mechanical joints 30, respectively. That is, when one of the third mechanical joints 30 connects the connecting arm 70 and the support arm 60, the connecting arm 70 acts as the first arm, and the support arm 60 acts as the second arm; and when the other third mechanical joint 30 connects the connecting arm 70 and the working arm 80, the connecting arm 70 acts as the first arm, and the working arm 80 acts as the second arm.

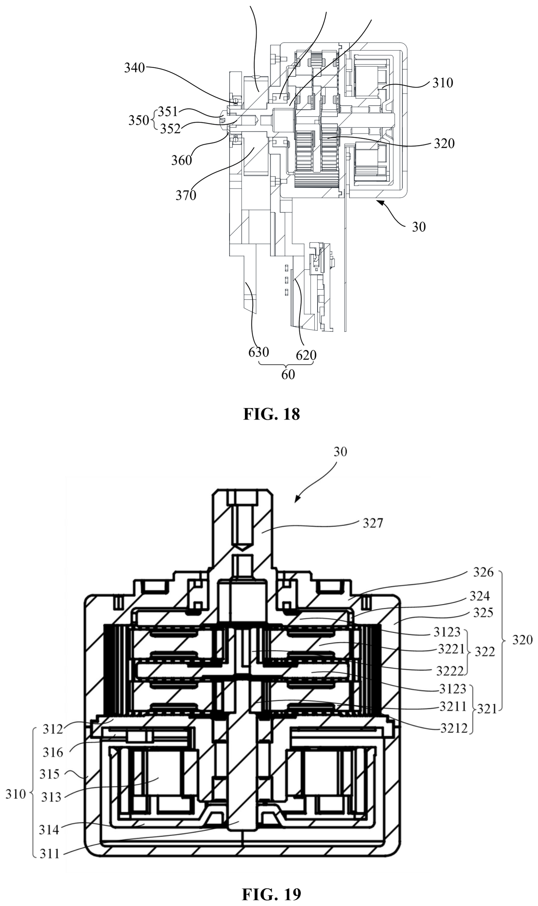

In the above embodiment, as shown in FIG. 19, the motor 310 further includes a motor base plate 312, a stator 313 and a rotor 314. The rotor 314 is located outside the stator 313, a first output shaft 311 penetrates through the motor base plate 312, and the stator 313 is connected to the motor base plate 312 and located on a circumferential side of the first output shaft 311. The planetary speed-reducing mechanism 320 includes a primary gear set 321, and the primary gear set 321 is connected to the first output shaft 311 and arranged adjacent to the motor base plate 312.

That is, the motor 310 is an outer rotor 314 motor 310, and the first output shaft 311 of the motor 310 penetrates through the motor base plate 312 and is connected to the primary gear set 321 of the planetary speed-reducing mechanism 320, such that the power is transmitted to the planetary speed-reducing mechanism 320. The stator 313 of the motor 310 is connected to the motor base plate 312 and located on the circumferential side of the first output shaft 311. That is, the stator 313 is coaxially arranged with the first output shaft 311. As the primary gear set 321 is arranged adjacent to the motor base plate 312, the motor base plate 312 may be used as an input end cover of the planetary speed-reducing mechanism 320, that is, the motor base plate 312 integrates the functions of both the motor base plate 312 and the input end cover of the gearbox. When this motor is compared with a planetary reducing-speeding motor in related art, the input end cover of the gearbox, i.e., the planetary speed-reducing mechanism is simplified, such that a simple structure and a low cost are achieved, and this can meet design requirements of the third mechanical joint 30 for the compact structure and smaller dimensions. Meanwhile, the concentricity of the motor 310 and the planetary speed-reducing mechanism 320, i.e., the gearbox can be improved, which is conducive to reducing the wear of the gearbox, improves the reliability of the third mechanical joint 30, and is also conducive to reducing the noise of the third mechanical joint 30 during working, reducing the impact on the user, and improving the user satisfaction.

In the above embodiment, an annular boss is arranged on a side of the motor base plate 312 away from the primary gear set 321, and the first output shaft 311 penetrates through the annular boss and is rotatably connected to the annular boss. Specifically, the first output shaft 311 passes through the annular boss, and the first output shaft 311 is sleeved with a bearing, and the bearing is located between the first output shaft 311 and the annular boss, so as to realize the rotational connection between the first output shaft 311 and the annular boss.

The first output shaft 311 is coaxially arranged with the annular boss, and the stator 313 is distributed on the circumferential side of the annular boss. Therefore, the stator 313 can be distributed on the circumferential side of the first output shaft 311, and is coaxially arranged with the first output shaft 311, thereby achieving a simple structure and easy implementation.

Further, the motor 310 further includes a Hall plate 316. That is, the motor 310 of the third mechanical joint 30 in the embodiment of the present application is a Hall motor. The Hall plate 316 is connected to the motor base plate 312, and the Hall plate 316 is located between the stator 313 and the motor base plate 312 along an axial direction of the first output shaft 311. Due to the arrangement of the Hall plate 316, the position of the rotor 314 can be well detected, such that the motor 310 is stable in use, large in torque during starting and free of abnormal noise. Therefore, the working noise of the mechanical joints is further reduced, and the impact on the user is reduced.

In some possible embodiments provided in the present application, as shown in FIG. 19, the motor 310 further includes a motor housing 315. The motor housing 315 is connected to the motor base plate 312, enclosing and forming a motor mounting chamber 317; and the stator 313 and the rotor 314 are located in the motor mounting chamber 317. It can be understood that the Hall plate 316 is also located in the motor mounting chamber 317. Therefore, the stator 313 and the rotor 314 are protected by the motor housing 315 and the motor base plate 312, thereby prolonging the service life of the motor 310, and improving the reliability of the mechanical joints.

In some possible embodiments provided in the present application, as shown in FIG. 19, the planetary speed-reducing mechanism 320 further includes a secondary gear set 322, an inner gear ring 325 and an output end cover 326. The output end cover 326 is connected to the first arm; and both ends of the inner gear ring 325 are connected to the motor base plate 312 and the output end cover 326 respectively, enclosing and forming a speed-reducing mounting chamber 324. The primary gear set 321 is located in the speed-reducing mounting chamber 324 and includes a first sun gear 3211, a first planetary gear 3212 and a first planetary rack 3213, and the first sun gear 3211 is fixed to the first output shaft 311. The secondary gear set 323 is arranged adjacent to the output end cover 326 and includes a second sun gear 3221, a second planetary gear 3222 and a second planetary rack 3223 which are located in the speed-reducing mounting chamber 324. The first planetary gear 3212 and the second planetary gear 3222 are both meshed with the inner gear ring 325. The second sun gear 3221 is fixed to the first planetary rack 3213. The second planetary rack 3223 includes a second output shaft 327 penetrating through the output end cover 326. The second output shaft 327 is, as an output end, connected to the second arm.

In this embodiment, the planetary speed-reducing mechanism 320 is a secondary planetary speed-reducing mechanism. The power of the motor 310 is transmitted to the first planetary gear 3212 through the first output shaft 311 via the first sun gear 3211 and the first planetary gear 3212 of the primary gear set 321, which are meshed with each other; and to the second planetary gear 3222 through the second sun gear 3221 and the second planetary gear 3222 of the secondary gear set 322 which are meshed with each other because the first planetary gear 3212 of the primary gear set 321 is meshed with the inner gear ring 325 to drive the first planetary rack 3213 to rotate. Because the second planetary gear 3222 of the secondary gear set 323 is meshed with the inner gear ring 325 to drive the second planetary rack 3223 to rotate, and then drive the second output shaft 327 of the second planetary rack 3223 located outside the speed-reducing mounting chamber 324 to rotate, the second output shaft 327 is, as the output end of the planetary speed-reducing mechanism 320, connected to the second arm, and then drives the second arm to rotate relative to the first arm.

In the above embodiment, the inner gear ring 325 and the output end cover 326 are of an integrated structure. Such an arrangement is conducive to improving the stiffness of the inner gear ring 325, improving the torque transmission strength, and further improving the stability and reliability of the third mechanical joints 30 in actions. Meanwhile, the inner gear ring 325 and the output end cover 326 are of an integrated structure, which is conducive to mass production, simplifying assembly steps, and reducing the cost.

In some possible embodiments provided in the present application, the first arm is the connecting arm 70, both ends of the connecting arm 70 are connected to the output end of the planetary speed-reducing mechanism 320, and the second arm is the support arm 60 or the working arm 80. As shown in FIG. 14, a positioning structure is arranged on the first arm, a limit structure 3261 is arranged on a side of the output end cover 326 away from the motor base plate 312, and the limit structure 3261 matches the positioning structure to constrain the rotation of the output end cover 326 relative to the first arm. That is to say, the limit structure matches the positioning structure for rotational positioning and torque bearing, so as to improve the operational reliability and stability of the third mechanical joint 30.

Further, for the positioning structure and the limit structure 3261, one may be of a protrusion structure, and the other is of a groove structure. By matching the protrusion structure with the groove structure, the rotational positioning and torque bearing can be realized. Specifically, the positioning structure may be a groove structure arranged on the first arm, and the limit structure 3261 may be a protrusion structure arranged on the output end cover 326. It can be understood that the groove structure may also be arranged on the output end cover 326, and the protrusion structure may be arranged on the first arm, also achieving a limiting function.

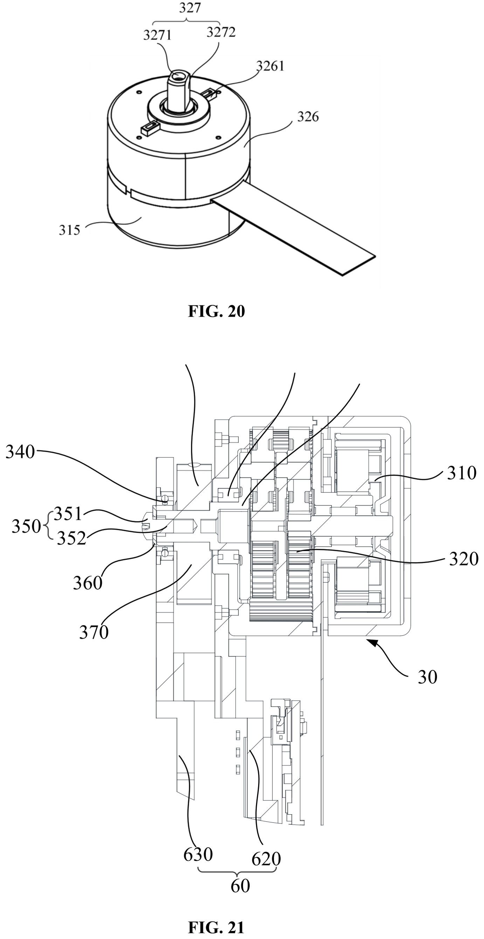

In some possible embodiments provided in the present application, as shown in FIG. 21, the third mechanical joint 30 further includes a first bearing 330, a flange bearing 340, a first connecting member 350 and a second pre-tightening spacer 360. The second output shaft 327 is sleeved with the first bearing 330, and the output end cover 326 is rotatably connected to the second output shaft 327 through the first bearing 330.

The first arm includes a first connecting part 620 and a second connecting part 630 which are arranged oppositely, and a positioning structure is arranged on the first connecting part 620, that is, the first connecting part 620 is arranged adjacent to the output end cover 326, and limiting is achieved through the positioning structure and the limit structure 3261. The second connecting part 630 is located at a side of the first connecting part 620 away from the output end cover 326. The flange bearing 340 is connected to the second connecting part 630, that is, the flange bearing 340 is mounted on the second connecting part 630. For example, the flange bearing 340 is clamped into the second connecting part 630 from a side of the second connecting part 630 away from the first connecting part 620, and the second output shaft 327 is rotatably connected to the second connecting part 630 through the flange bearing 340. An end part of the second output shaft 327 located outside the speed-reducing mounting chamber 324 is provided with a connecting hole 3271, and the first connecting member 350 can be connected to the connecting hole 3271. Along an axial direction of the second output shaft 327, the second pre-tightening spacer 360 is clamped between the first connecting member 350 and the second output shaft 327, and a side of the second pre-tightening spacer 360 facing the second output shaft 327 can be abutted against the flange bearing 340, that is, the flange bearing 340 and the second output shaft 327 are located on the same side of the second pre-tightening spacer 360.

After the second pre-tightening spacer 360 is clamped between the first connecting member 350 and the second output shaft 327, the second pre-tightening spacer 360 can be used as a baffle to constrain the motion of the flange bearing 340 relative to the second connecting part 630 along the axial direction of the second output shaft 327 toward a direction away from the second connecting part 630. Therefore, the flange bearing 340 can be reliably fixed on the second connecting part 630, and meanwhile the second output shaft 327 can be fixed on the second connecting part 630, thereby being able to constrain the movement of the second output shaft 327 in the axial direction.

That is to say, the third mechanical joint 30 provided in the embodiment of the present application adopts a simply supported beam-type connection. The first connecting part 620 of the first arm close to the motor 310 side matches the limit structure 3261 of the output end cover 326 through the positioning structure, such that the circumferential rotation of the motor 310 is limited. In addition, the first connecting part 620 is rotatably connected to the second output shaft 327 through the first bearing 330 of the speed-reducing motor 310, and the second connecting part 630 is rotatably connected to the second output shaft 327 by adopting the flange bearing 340. The second pre-tightening spacer 360 is clamped between the first connecting member 350 and the second output shaft 327 by using the connection of the first connecting member 350 to the connecting hole 3271 in the end part of the second output shaft 327 away from the motor base plate 312. In addition, a side of the second pre-tightening spacer 360 facing the second output shaft 327 can be abutted against the flange bearing 340. This configuration, in conjunction with the structure of the flange baring 340 itself, enables mounting of the flange bearing 340 onto the second connecting part 630. Meanwhile, the movement of the second output shaft 327 in the axial direction can be limited, and the axial motion of the motor 310 can be further limited. Such an arrangement achieves a simple structure, is conducive to reducing the dimensions of the third mechanical joint 30, can meet the design requirements of the mechanical arm 001 for the compact structure and smaller dimensions, and expands the operational range of the mechanical joints.

Specifically, an outer edge of the flange bearing 340 is clamped in a mounting through hole of the second connecting part 630 and the second pre-tightening spacer 360 is abutted against the flange bearing 340. Thus, the flange bearing 340 can be limited on the second connecting part 630 along the axial direction of the second output shaft 327.

In the above embodiment, as shown in FIG. 21, the first connecting member 350 includes a head part 351 and a stem part 352. For example, the first connecting member 350 is a bolt, and the first connecting hole 3271 is a threaded hole. The stem part 352 is connected to the connecting hole 3271. Along the axial direction of the second output shaft 327, the second pre-tightening spacer 360 is located between the head part 351 and the end part of the second output shaft 327, and then the second pre-tightening spacer 360 can be clamped between the end part of the second output shaft 327 and the head part 351 of the first connecting member 350 by adjusting a connection length between the stem part 352 and the connecting hole 3271.

In a plane parallel to a radial direction of the second output shaft 327, a projection of the second pre-tightening spacer 360 has an overlap with a projection of the second output shaft 327, and the projection of the second pre-tightening spacer 360 has an overlap with a projection of the flange bearing 340, such that the same side of the second pre-tightening spacer 360 can be abutted against the flange bearing 340 and the end part of the second output shaft 327 at the same time, the flange bearing 340 can then be constrained on the second connecting part 630 along the axial direction of the second output shaft 327, the movement of the second output shaft 327 along the axial direction can be constrained, and then the axial motion of the motor 310 can be constrained.

In some possible embodiments provided in the present application, as shown in FIGs. 18, 19, 20, 21 and 22, the third mechanical joint 30 further includes a hoop 370 and a second connecting member 380. A first limit surface 3272 and a second limit surface are arranged on a circumferential side of the end part of the second output shaft 327 that is located outside the speed-reducing mounting chamber 324, the first limit surface 3272 is used for contact with the hoop 370, the second limit surface is used for contact with the second arm, the second arm is located between the first connecting part 620 and the second connecting part 630, and the hoop 370 and the second arm are connected through the second connecting member 380. Therefore, the second output shaft 327 can be reliably connected to the second arm, and thus the second output shaft 327 rotates to drive the second arm to rotate, so as to rotate the second arm relative to the first arm, e.g., achieve a raising operation of the second arm relative to the first arm.

The arrangement of the first limit surface 3272 and the second limit surface is conducive to increasing a contact area between the second output shaft 327 and the hoop 370 as well as a contact area between the second output shaft 327 and the second arm, and plays a certain limit role. Then, the second connecting member 380 is used to connect the hoop 370 with an operating mechanism, such that the second arm can be reliably connected to the second output shaft 327.

Specifically, the second connecting member 380 may be a bolt, and the hoop 370 and the operating mechanism may be connected through the bolt.

In the above embodiment, the first limit surface 3272 and the second limit surface are arranged oppositely, and both are of planar structures. That is, the second output shaft 327 is a shaft with two opposing flat surfaces. The planar structures that are arranged oppositely facilitate processing and positioning, and can increase a contact area between the second output shaft 327 and the hoop 370 and a contact area between the second output shaft 327 and the operating mechanism, and play a good positioning role, and is then conducive to improving the reliability and stability of the connection between the second output shaft 327 and the operating mechanism.

Further, the third mechanical joint 30 further includes a third rotation angle detecting apparatus. The third rotation angle detecting apparatus is arranged on the second output shaft 327 of the third driving part, and used for detecting a rotation angle of the second output shaft 327. The third driving part also rotates or stops rotating according to a detection result of the third rotation angle detecting apparatus. Therefore, the second arm can be flexibly controlled to rotate relative to the first arm to any required angular position, so as to meet the requirements of different working conditions of the mechanical arm 001 and expand the operational range of the product. Specifically, the third rotation angle detecting apparatus may be a Hall sensor assembly.

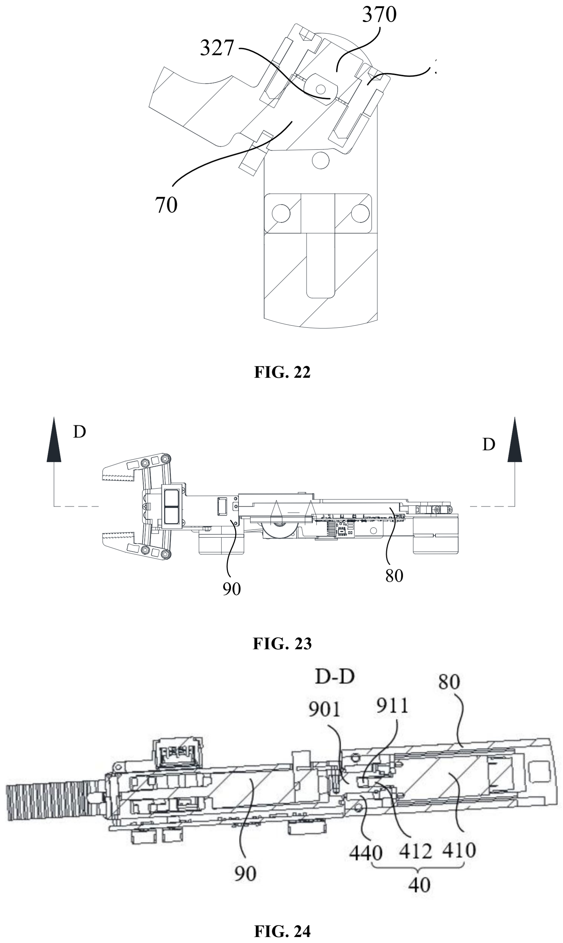

As shown in FIGs. 23, 24, 25 and 26, in some possible embodiments provided in the present application, the fourth mechanical joint 40 includes a fourth driving part 410, a photoelectric sensor 420 and a baffle 430. The fourth driving part 410 is arranged on the working arm 80 and connected with the mechanical hand 90 to drive the mechanical hand 90 to rotate, and one of the photoelectric sensor 420 and the baffle 430 is arranged on the mechanical hand 90 and the other is arranged on the working arm 80. The baffle 430 is used for changing a sensing result of the photoelectric sensor 420 when the mechanical hand 90 is in the zero position, that is, the photoelectric sensor 420 and the baffle 430 are arranged to determine the zero position of the mechanical hand 90.

For the fourth mechanical joint 40 provided by the embodiment of the present application, by adding the photoelectric sensor 420 and the baffle 430, when the mechanical hand 90 is in the zero position, the baffle 430 is used for changing the sensing result of the photoelectric sensor 420. Therefore, it can be determined that the mechanical hand 90 is in the zero position according to the change of the sensing result of the photoelectric sensor 420, such that the control system can further perform corresponding operations according to the mechanical hand 90 in the zero position, so as to improve the intelligence of the mechanical arm 001 and improve the user satisfaction. The zero position may be the position where the mechanical hand 90 is in the storage state relative to the working arm 80, or the initial position of relative rotation. For example, when the rotation angle of the mechanical hand 90 relative to the working arm is 0°, it can be said that the mechanical hand 90 is in the zero position.

The photoelectric sensor 420 may be arranged on the mechanical hand 90, and the baffle 430 may be arranged on the frame of the fourth mechanical joint 40, or the photoelectric sensor 420 may be arranged on the frame of the fourth mechanical joint 40, and the baffle 430 may be arranged on the mechanical hand 90 to meet the requirements of different structures of the photoelectric sensor 420 and the baffle 430. The frame of the mechanical joint may be the working arm 80, a housing 411 of the fourth driving part 410, etc.

In the above embodiment, the fourth driving part 410 is connected with the photoelectric sensor 420, and the fourth driving part 410 rotates or stops rotating according to the sensing result of the photoelectric sensor 420. In this way, the working state of the fourth driving part 410 can be reasonably controlled according to the sensing result of the photoelectric sensor 420, and then the position of the mechanical hand 90 is reasonably controlled. Thus, the mechanical hand 90 is in different positions to meet the different working condition requirements of the mechanical hand 90, thereby expanding the operational range of the product.

Specifically, when the sensing result of the photoelectric sensor 420 is changed, it is possible that the mechanical hand 90 is in the zero position, that is, the mechanical hand 90 is in the storage position, such that the fourth driving part 410 stops rotating according to the sensing result of the photoelectric sensor 420. Thus, the mechanical hand 90 stops rotating and remains in the zero position, which is convenient for storage and avoids the situation that the mechanical hand 90 continues rotating to cause energy waste and inconvenience in storage due to continuous working of the fourth driving part 410.

It can be understood that when the sensing result of the photoelectric sensor 420 is not changed, it is possible that the mechanical hand 90 is in the rotating state or a zero state, and the fourth driving part 410 continues to remain the current rotating or rotation stopping state according to the sensing result of the photoelectric sensor 420, that is, the mechanical hand 90 can be remained in the current state.

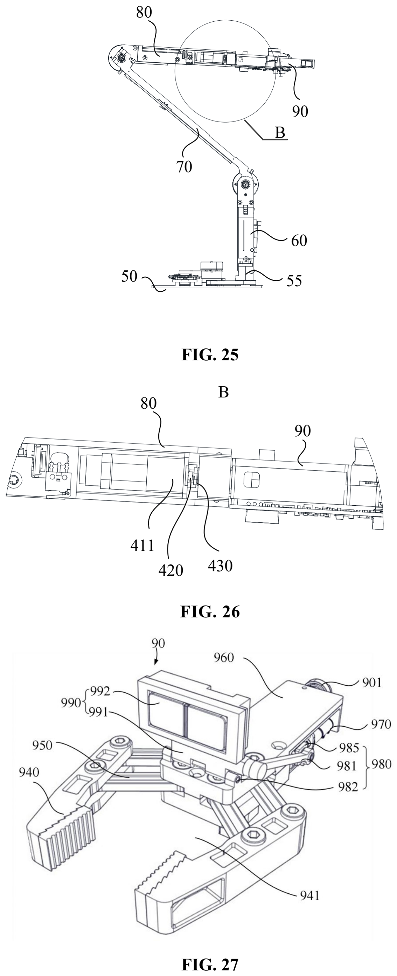

In some possible embodiments provided by the present application, as shown in FIGs. 24 and 26, the fourth driving part 410 includes the fourth housing 411 and a fourth output shaft 412. For example, the fourth driving part is a motor, the fourth housing 411 of the fourth driving part is connected with the working arm 80, that is, the fourth housing 411 of the fourth driving part 410 is mounted on the working arm 80, and the photoelectric sensor 420 is arranged on the working arm 80 or the housing 411. That is to say, the photoelectric sensor 420 is arranged on a fixed mechanism. The mechanical hand 90 includes a connecting shaft 901 connected with the fourth output shaft 412, and the baffle 430 is arranged on the connecting shaft 901, that is, the baffle 430 rotates synchronously with the connecting shaft 901.

When the mechanical hand 90 is in the zero position, the baffle 430 is used for preventing the photoelectric sensor 420 from receiving optical signals, such that the sensing result of the photoelectric sensor 420 will be changed, thereby achieving a simple structure, easy implementation and being suitable for popularization and application.

In some possible embodiments provided in the present application, as shown in FIG. 24, the fourth mechanical joint 40 further includes a bearing apparatus 440, and one end of the working arm 80 facing the mechanical hand 90 is provided with a mounting hole 810 and a mounting groove 820 communicated with the mounting hole 810 and located on the side of the mounting hole 810 away from the mechanical hand 90. The fourth driving part 410 is located in the mounting groove 820, the connecting shaft 901 penetrates the mounting hole 810, the bearing apparatus 440 is located in the mounting hole 810, and the working arm 80 and the connecting shaft 901 are connected through the bearing apparatus 440.

Since the fourth driving part 410 is located in the mounting groove 820, the size of the working arm 80 will not increase due to the arrangement of the fourth driving part 410, which can meet the design requirements of the fourth mechanical joint 40 for the compact structure and smaller dimensions and expand the operational range.

The bearing apparatus 440 is located in the mounting hole 810 of the working arm 80, and the working arm 80 and the connecting shaft 901 are connected through the bearing apparatus 440, such that the connecting shaft 901 can be supported through the bearing apparatus 440. The connecting shaft 901 is connected with the fourth output shaft 412 of the fourth driving part 410, such that the fourth driving part 410 can further drive the working arm 80 to rotate. Further, the bearing apparatus 440 is a ball bearing or a sliding bearing.

In the above embodiment, as shown in FIG. 24, the end part of the connecting shaft 901 is provided with a limit hole 911, and the fourth output shaft 412 is inserted into the limit hole 911 to be connected with the connecting shaft 901. The arranged limit hole 911 achieves a better limiting function and can limit the rotation of the connecting shaft 901 relative to the fourth output shaft 412, such that the rotation of the fourth output shaft 412 can drive the connecting shaft 901 to rotate, and then drive the mechanical hand 90 to rotate.

Specifically, the limit hole 911 is a D-shaped hole and the D-shaped hole provides a planar constraint between the connecting shaft 901 and the fourth output shaft 412, achieves a function similar to that of a key and further achieves that the rotation of the fourth output shaft 412 can drive the connecting shaft 901 to rotate. In addition, it is convenient to machine the D-shaped hole, facilitating assembly.

In some possible embodiments provided in the present application, the fourth mechanical joint 40 further includes a fourth rotation angle detecting apparatus. The fourth rotation angle detecting apparatus is arranged on the fourth driving part 410 and used for detecting a rotation angle of the fourth output shaft 412, and the fourth driving part 410 also rotates or stops rotating according to the detection result of the rotation angle detecting apparatus. In this way, according to the rotation angle of the fourth output shaft 412 detected by the rotation angle detecting apparatus, the working state of the fourth driving part 410 is reasonably controlled. Thus the mechanical hand 90 rotates to a proper position to meet the requirements of different working conditions of the mechanical hand 90. Specifically, the fourth rotation angle detecting apparatus is a Hall sensor.

As shown in FIGs. 27 to 34, in some possible embodiments provided in the present application, the mechanical hand 90 includes a base seat 960, a fifth driving part 910, a second screw rod 920, a second guiding nut 930, two clamping parts 940 and two connecting rod mechanisms 950. The base seat 960 is connected with the fourth mechanical joint 40, the fifth driving part 910 is connected with the base seat 960, and the second screw rod 920 is in threaded connection with the second guiding nut 930 and connected with the fifth driving part 910. The second guiding nut 930 is provided with a cylindrical boss 931, a first end of each connecting rod mechanism 950 is movably connected with the cylindrical boss 931, and a second end of each connecting rod mechanism 950 is hinged to the corresponding clamping part 940. The fifth driving part 910 drives the second screw rod 920 to rotate, such that the second guiding nut 930 moves relative to the second screw rod 920 to drive the two connecting rod mechanisms 950 to rotate, which further drives the two clamping parts 940 to approach or move away from each other.

As shown in FIGs. 27, 28 and 29, for the mechanical hand 90 provided by the embodiment of the present application, the cylindrical boss 931 is arranged on the second guiding nut 950, and the cylindrical boss 931 is movably connected with the first ends of two connecting rod mechanisms 950. In this way, in the process in which the fifth driving part 910 drives the second screw rod 920 to rotate, the second guiding nut 930 will drive the first end of each connecting rod mechanism 950 to move synchronously relative to the second screw rod 920. Therefore, the two connecting rod mechanisms 950 will be driven to rotate to approach or move away from each other, and then the two clamping parts 940 connected with the second ends of the two connecting rod mechanisms 950 will be driven to approach or move away from each other, so as to realize the grasping or releasing operation of the mechanical hand 90. Thus, by using the second guiding nut 930 and the second screw rod 920, which are in threaded connection, in cooperation with the fifth driving part 910 and the two connecting rod mechanisms 950, the two clamping parts 940 can approach or move away from each other, so as to realize the grasping or releasing operation of the mechanical hand 90, thereby achieving a simple structure and a lower cost.

The cylindrical boss 931 is arranged on the second guiding nut 930, that is, the cylindrical boss 931 and the second guiding nut 930 may be integrally formed. Due to such an arrangement, the arrangement of the connecting structure between the second guiding nut 930 and the connecting rod mechanisms 950 is simplified, which can meet the design requirements of the mechanical hand 90 for the compact structure and smaller dimensions and is conducive to expanding the operational range of the mechanical hand 90. Thus the mechanical hand 90 can meet the design requirements of the self-moving cleaning device for the compact structure and smaller dimensions.

In some possible embodiments provided in the present application, the cylindrical boss(es) 931 is/are distributed on one side or both sides of the second guiding nut 930 in a first direction, and the direction in which the two clamping parts 940 approach or move away from each other is perpendicular to the first direction.

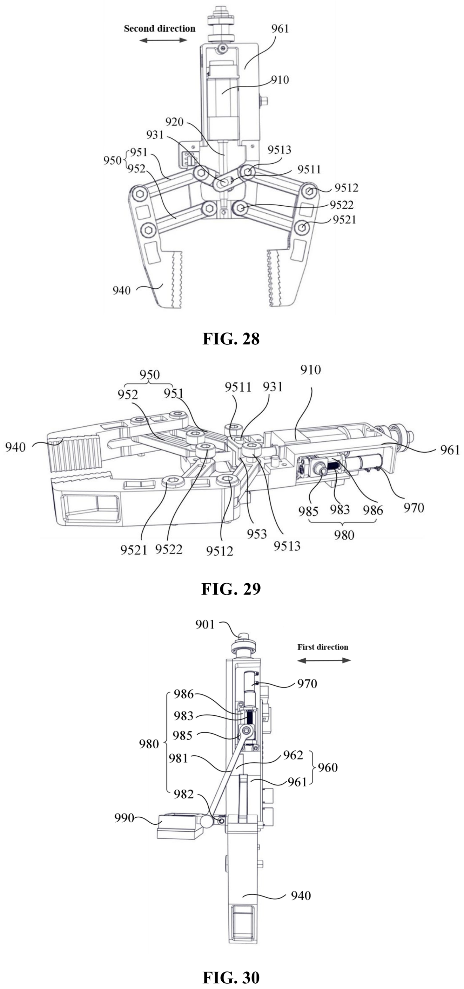

The direction in which the two connecting rod mechanisms 950 approach or move away from each other may be a second direction, and the first direction is perpendicular to the second direction, for example, the first direction may be the vertical direction and the second direction may be the horizontal direction, and the first direction and the second direction may be as shown in FIGs. 30 and 28.

In the present embodiment, when the cylindrical boss 931 is distributed on one side of the second guiding nut 930 in the first direction, the first ends of the two connecting rod mechanisms 950 are both movably connected with the cylindrical boss 931; and when the cylindrical bosses 931 are distributed on both sides of the second guiding nut 930 in the first direction, the first ends of the two connecting rod mechanisms 950 are movably connected with the corresponding cylindrical bosses 931 respectively, that is, the two connecting rod mechanisms 950 are movably connected with the corresponding cylindrical bosses 931 respectively from two sides of the second guiding nut 930. The cylindrical boss(es) 931 is/are distributed on one side or both sides of the second guiding nut 930 in the first direction. Due to such an arrangement, the two connecting rod mechanisms 950 and the second guiding nut 930 are stacked together in the first direction. Compared with the mechanical hand in the related art in which the two connecting rod mechanisms 950 are movably connected with the second guiding nut 930 in the second direction, this arrangement satisfies the design requirement for the compact structure. Under the condition that the structural sizes of all components are unchanged, the overall size of the mechanical hand 90 in the second direction can be reduced, the design requirements of the mechanical hand 90 for the compact structure and smaller dimensions can be further met under the condition that the mechanical hand 90 has sufficient strength, and the mechanical hand 90 is expanded in operational range and suitable for popularization and application.

The second guiding nut 930 is provided with the cylindrical boss(es) 931 on one side or two opposite sides in the first direction, and the connecting rod mechanisms 950 are hinged to the cylindrical boss 931, which can ensure that the connecting rod mechanisms 950 have a sufficient movement range and rotate flexibly and smoothly relative to the nut. In addition, the cylindrical boss 931 is easy to machine and implement.

In some possible embodiments provided in the present application, as shown in FIGs. 28, 29 and 30, the connecting rod mechanism 950 includes a first rod 951, a first end of the first rod 951 is provided with a sliding slot 9511, and the cylindrical boss 931 is located in the sliding slot 9511 and can move in the sliding slot 9511 with the movement of the second guiding nut 930. A second end of the first rod 951 is hinged to the clamping part 940 through a first hinge point 9512 to drive the clamping part 940 to move, and the part of the first rod 951 between the first end and the second end is hinged to the base seat 960 by a second hinge point 9513. Thus, when the fifth driving part 910 drives the second screw rod 920 to rotate, the second guiding nut 930 moves relative to the second screw rod 920, and the first ends of the two first rods 951 can be driven to move through the cooperation of the cylindrical bosses 931 and the sliding slots 9511. Thus, through the two first rods 951, the two connecting rod mechanisms 950 correspondingly connected to the second ends of the first rods 951 can be driven to be closed or opened in a scissor-like manner, thereby realizing clamping and unloading functions of the clamping parts 940.

Geometric centers of the first hinge point 9512, the second hinge point 9513 and the sliding slot 9511 may not be collinear, or the geometric centers of the first hinge point 9512, the second hinge point 9513 and the sliding slot 9511 may also be collinear.

In the above embodiment, as shown in FIGs. 28 and 29, the connecting rod mechanism 950 further includes a second rod 952, a first end of the second rod 952 is hinged to the clamping part 940 through a third hinge point 9521, and a second end of the second rod 952 is hinged to the base seat 960 through a fourth hinge point 9522. The figure formed by the first hinge point 9512, the second hinge point 9513, the third hinge point 9521 and the fourth hinge point 9522 is a parallelogram. That is, the connecting rod mechanism 950 is a parallel four-connecting rod mechanism, and the parallel four-connecting rod mechanism has a simple structure and good dynamic balance, which can be further conducive to improving the operational stability and reliability of the mechanical hand 90.

Specifically, the fifth driving part 910 is a motor, the fifth driving part 910 is mounted on the base seat 960, and the base seat 960 and the fifth driving part 910 remain relatively stationary. A fifth output shaft of the fifth driving part 910 is connected with the second screw rod 920, and the fifth driving part 910 drives the second screw rod 920 to rotate, such that the second guiding nut 930 in threaded connection with the second screw rod 920 can move along the second screw rod 920. For example, if the fifth output shaft of the fifth driving part 910 drives the second screw rod 920 to rotate in a forward direction, the second guiding nut 930 can move forward along the second screw rod 920, otherwise, if the fifth output shaft of the fifth driving part 910 drives the second screw rod 920 to rotate in a backward direction, the second guiding nut 930 can move backward along the second screw rod 920.

Since the cylindrical boss 931 of the second guiding nut 930 can move along the sliding slot 9511 in the first rod 951 of the connecting rod mechanism 950, the second guiding nut 930 can exert a force on the connecting rod mechanism 950 through the first rod 951 during moving along the second screw rod 920. Since the first rod 951 is hinged to the clamping part 940 through the first hinge point 9512 and hinged to the base seat 960 through the second hinge point 9513, the second rod 952 is hinged to the clamping part 940 through the third hinge point 9521 and hinged to the base seat 960 through the fourth hinge point 9522, and the connecting rod mechanism 950 is a parallel four-connecting rod mechanism. Therefore, the second guiding nut 930 moves front and back along the second screw rod 920, and through the first rods 951, the two connecting rod mechanisms 950 can be driven to be closed or opened in a scissor-like manner, thereby realizing the clamping and unloading functions of the clamping parts 940.

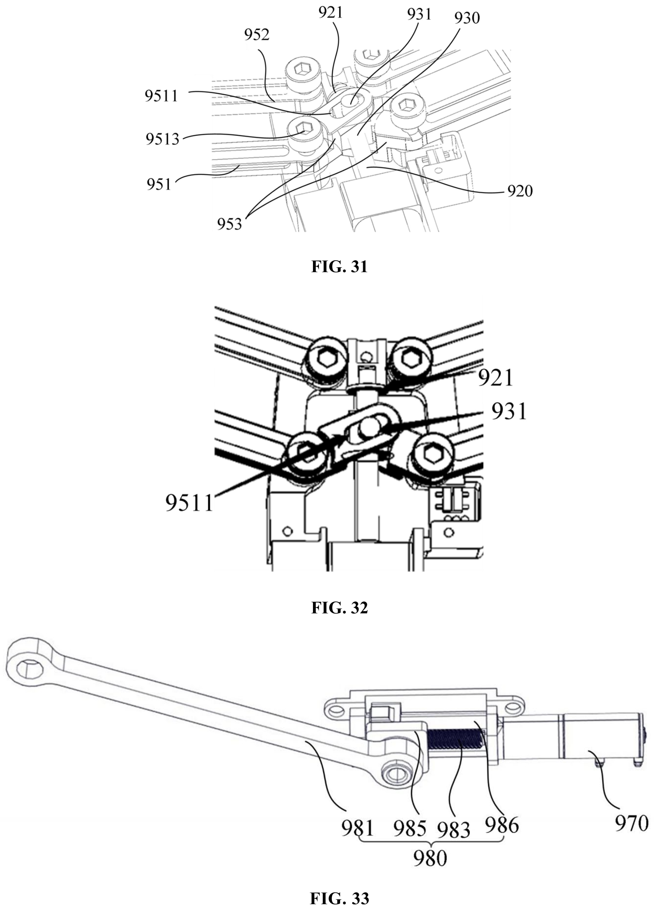

In the above embodiment, as shown in FIGs. 29 and 31, the first rod 951 is provided with a bent structure 953, the bent structure 953 is located between the second hinge point 9513 and the sliding slot 9511, and the bent structures 953 of the two connecting rod mechanisms 950 are bent in opposite directions. With such an arrangement, in the first direction, the distance between the sliding slots 9511 of the two first rods 951 is greater than the distance between the second hinge points 9513 of the two first rods 951. Therefore, after the two first rods 951 and the second guiding nut 930 are stacked together, the distance between the second hinge points 9513 of the two first rods 951 is smaller in the first direction, such that the structure of the mechanical hand 90 is compact, the overall size of the mechanical hand 90 in the first direction is reduced, and the design requirements of the mechanical hand 90 for the compact structure and smaller dimensions can be met.

Specifically, as shown in FIG. 31, two cylindrical bosses 931 are distributed on both sides of the second guiding nut 930 in the first direction, the bent structure 953 of the first rod 951 above the second guiding nut 930 is upward and the bent structure 953 of the first rod 951 below the second guiding nut 930 is downward. Therefore, after the two first rods 951 are hinged to the cylindrical bosses 931 of the second guiding nut 930 through the sliding slots 9511, the two first rods 951 are stacked together with the second guiding nut 930 in opposite vertical directions, thereby reducing the height difference between the parts of the two first rods 951 away from the bent structures 953 in the first direction. Thus, the height difference between the second hinge points 9513 of the two first rods 951 in the first direction is smaller or the second hinge points 9513 of the two first rods 951 are parallel in the first direction, thereby achieving a compact structure of the mechanical hand 90. In addition, this arrangement ensures balanced force distribution between the two clamping parts 940 and thus enables the stable clamping.

In some possible embodiments provided in the present application, as shown in FIGs. 31 and 32, the mechanical hand 90 further includes a thrust spacer 921, a sliding hole for insertion of the end of the second screw rod 920 away from the fifth driving part 910 is arranged in the base seat 960, a stepped part located outside the sliding hole is arranged on the circumferential side of the second screw rod 920, and the thrust spacer 921 is located between the end surface of the sliding hole and the stepped part.

The axial force of the second screw rod 920 can be loaded on the thrust spacer 921 when the mechanical hand 90 acts to enable the two clamping parts 940 to approach each other to clamp an object, or when the mechanical hand 90 acts to enable the two clamping parts 940 to approach each other to the limit positions. At this time, the fifth driving part 910 does not bear the axial force, thereby protecting the fifth driving part 910 well and avoiding the problem that the second screw rod 920 is damaged since the two clamping parts 940 continue approaching each other after reaching the limit positions, which is conducive to prolonging the service life of the fifth driving part 910 and improving the reliability of the mechanical hand 90.

In some possible embodiments provided in the present application, as shown in FIG. 30, the base seat 960 includes a first cover plate 961 and a second cover plate 962 which are distributed in the first direction, parts of the first cover plate 961 and the second cover plate 962 are connected with each other and define a chamber for accommodating the fifth driving part 910, a gap is arranged between the other parts of the first cover plate 961 and the second cover plate 962, and the second guiding nut 930 and parts of the connecting rod mechanisms 950 are located in the gap.

That is, the fifth driving part 910 is mounted in the chamber defined by the first cover plate 961 and the second cover plate 962, such that the first cover plate 961 and the second cover plate 962 better protect the fifth driving part 910. The second guiding nut 930 and parts of the connecting rod mechanisms 950 are located in the gap between the first cover plate 961 and the second cover plate 962. In this way, the first cover plate 961 and the second cover plate 962 better protect the second guiding nut 930 and parts of the connecting rod mechanisms 950. This is conducive to improving the reliability of the mechanical hand 90. In addition, it is conducive to improving the aesthetic appeal and neatness of the appearance of the mechanical hand 90. Besides, the gap between the first cover plate 961 and the second cover plate 962 provides a sufficient movement space for the second guiding nut 930 and parts of the connecting rod mechanisms 950.

Specifically, the first cover plate 961 and the second cover plate 962 may be detachably connected by means of bolts, clamping and the like, so as to facilitate the maintenance of the second guiding nut 930 and the connecting rod mechanisms 950 between the two cover plates, thereby achieving high convenience in operation.

In some possible embodiments provided in the present application, as shown in FIGs. 27, 29 and 30, the mechanical hand 90 further includes a sixth driving part 970, a transmission mechanism 980 and a first imaging apparatus 990. The sixth driving part 970 is arranged on the base seat 960, the transmission mechanism 980 is connected with the sixth driving part 970 and the first imaging apparatus 990, and the sixth driving part 970 is used for driving the transmission mechanism 980 to drive the first imaging apparatus 990 to rotate relative to the base seat 960.

The mechanical hand 90 provided by the embodiment of the present application is additionally provided with the first imaging apparatus 990, such that while the mechanical hand 90 retains its original object-clamping function, the environment nearby the mechanical hand 90 can be subjected to image collection with the first imaging apparatus 990, which realizes functional diversification of the mechanical hand 90 and is suitable for popularization and application.

Further, the sixth driving part 970 can drive the first imaging apparatus 990 to rotate relative to the base seat 960 through the transmission mechanism 980, which can further change a shooting angle of the first imaging apparatus 990, so as to increase a collection range of the first imaging apparatus 990 and expand the operational range of the mechanical hand 90. In addition, the first imaging apparatus 990 can be placed in a reasonable position to avoid obstacles and protect a camera 992, which is conducive to reducing a failure rate of the first imaging apparatus 990 and improving the reliability of the product.

Further, the sixth driving part 970 drives the transmission mechanism 980 to drive the first imaging apparatus 990 to rotate relative to the base seat 960, which solves the problem of manually adjusting the shooting angle of the first imaging apparatus 990 and improves the intelligence of the mechanical hand 90.

In the above embodiment, one end of the first imaging apparatus 990 is rotatably connected with the base seat 960 through a second rotatable shaft 982; and the transmission mechanism 980 includes a third screw rod 983, a third guiding nut 984 and a connecting rod 981. The third screw rod 983 is in threaded connection with the third guiding nut 984 and connected with the sixth driving part 970. A first end of the connecting rod 981 is hinged to the third guiding nut 984, and a second end of the connecting rod 981 is hinged to the part of the first imaging apparatus 990 away from the second rotatable shaft 982. Thus, when the sixth driving part 970 drives the third screw rod 983 to rotate, the third guiding nut 984 moves relative to the third screw rod 983 to drive the first imaging apparatus 990 to pivot around the second rotatable shaft 982 through the connecting rod 981, so as to achieve the rotation of the first imaging apparatus 990 relative to the base seat 960. The sixth driving part 970 may be a motor, and the motor can drive the third screw rod 983 to rotate in the forward direction or reverse direction, so as to realize the pivoting of the first imaging apparatus 990 in the forward direction or reverse direction relative to the base seat 960. Specifically, through the cooperation of the sixth driving part 970, the third screw rod 983, the third guiding nut 984, the connecting rod 981 and the second rotatable shaft 982, the first imaging apparatus 990 can be driven to rotate relative to the base seat 960, thereby achieving a simple structure, high convenience operation and smaller dimensions, and being able to meet the design requirement of the mechanical hand 90 for the compact structure.

Specifically, the first imaging apparatus 990 includes an imaging bracket 991 and the camera 992. The imaging bracket 991 is connected with the base seat 960 through the second rotatable shaft 982. The imaging bracket 991 is hinged to the connecting rod 981, and the camera 992 is mounted on the imaging bracket 991. Thus, when the sixth driving part 970 drives the imaging bracket 991 to rotate relative to the base seat 960 through the transmission mechanism 980, the camera 992 rotates relative to the base seat 960, and different shooting angles can be further realized.

Further, the maximum rolling angle of the first imaging apparatus 990 may be 180°. That is, the first imaging apparatus can be rolled by any angle within the range from 0 to 180° relative to the base seat 960. It can be understood that the maximum rolling angle of the imaging apparatus may also be 200°, 270°, 300° or other angle values.

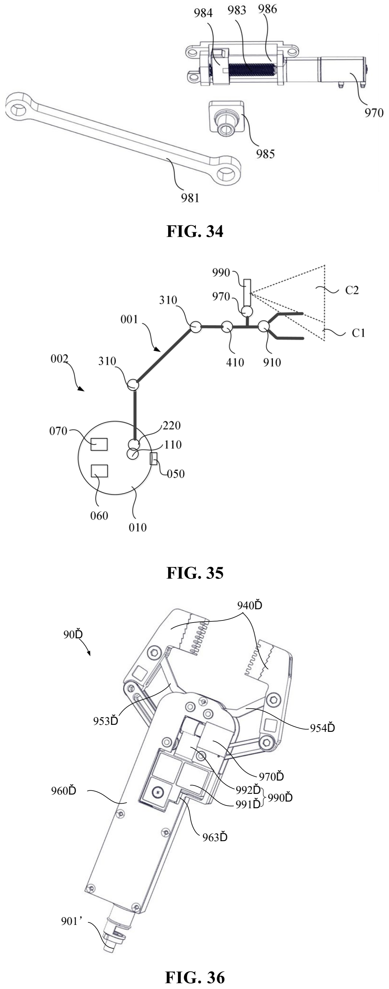

As shown in FIGS. 33 and 34, in some possible embodiments provided in the present application, the transmission mechanism 980 further includes a connecting block 985, and the connecting block 985 is fixedly connected to the third guiding nut 984 and hinged to the connecting rod 981. By proving the connecting block 985, the connecting rod 981 may be conveniently and reliably hinged to the third guiding nut 984.

One side of the connecting block 985 may be fixed to the third guiding nut 984 by means of welding, or the connecting block 985 may be fixed to the third guiding nut 984 by means of a bolt structure, clamping, etc. A side of the connecting block 985 away from the third guiding nut 984 may be provided with a circular boss. A first end of the connecting rod 981 may sleeve the circular boss through a circular hole to realize a hinging between the connecting rod 981 and the connecting block 985.

As shown in FIGs. 29, 30, 33 and 34, the transmission mechanism 980 further includes a slider 986. The slider 986 is arranged parallel to the third screw rod 983 and fixed to the base seat 960. The slider 986 penetrates through the third guiding nut 984 for constraining movement of the third guiding nut 984.

That is to say, the third guiding nut 984 is provided with a threaded hole and a through hole. The third guiding nut 984 is in threaded connection with the third screw rod 983 through the threaded hole and may move along the third screw rod 983 when the third screw rod 983 is rotating. The third guiding nut 984 is slidably connected to the slider 986 through the through hole, such that during the movement of the third guiding nut 984 along the third screw rod 983, within the constraints of the through hole and the slider 986, the third guiding nut 984 may also slide along the slider 986. Therefore, the arrangement of the slider 986 can improve the precision and accuracy of the movement of the third guiding nut 984 along the third screw rod 983 and reduces shaking of the third guiding nut 984 during the movement, which in turn improves the stability and accuracy of rolling of the first imaging apparatus 990 relative to the base seat 960 and hence is conducive to ensuring the shooting quality of the first imaging apparatus 990.

In some possible embodiments provided in the present application, an avoidance space 941 is formed between the two clamping parts 940, and the first imaging apparatus 990 may roll relative to the base seat 960 to be above the avoidance space 941. Therefore, when the first imaging apparatus 990 rolls relative to the base seat 960 to be above the avoidance space 941, if the camera 992 of the first imaging apparatus 990 faces the avoidance space 941, the first imaging apparatus 990 may collect an image from a perspective below the avoidance space 941 through the avoidance space 941, which further expands the collection range of the imaging apparatus.

As shown in FIGs. 35 to 42, in some embodiments provided in the present application, a structure of another mechanical hand 90' is also provided. It can be understood that the mechanical hand 90' provided by this embodiment may still be connected to the fourth output shaft 412 of the fourth mechanical joint by a connecting shaft 901', and the specific mode of connection is the same as that of the mechanical hand 90 shown in FIGs. 27 to 34, and thus will not be explained in detail here.

As shown in FIGs. 35 to 42, the mechanical hand 90' provided by the embodiment of the present application includes a base seat 960', the base seat 960' being provided with a holding groove 963' with an upward opening; a main driving part 910' and two clamping parts 940', which are arranged on the base seat 960' and located outside the holding groove 963', the main driving part 910' being in transmission connection with the two clamping parts 940' to drive the two clamping parts 940' to approach each other or move away from each other; and an auxiliary driving part 970' and a first imaging apparatus 990', the auxiliary driving part 970' being arranged inside the holding groove 963', and the auxiliary driving part 970' being in transmission connection with the first imaging apparatus 990' to drive the first imaging apparatus 990' to roll to be accommodated inside the holding groove 963' or to be located outside the holding groove 963'.

As shown in FIGs. 36, 40 and 41, for the mechanical hand 90' provided by the embodiment of the present application, the main driving part 910' drives the two clamping parts 940' to approach each other or move away from each other, so as to realize a grabbing or releasing operation of the mechanical hand 90'. In addition, the first imaging apparatus 990' is added, such that when the mechanical hand 90' retains its original object-clamping function, an environment or object near the mechanical hand 90' may be detected with the first imaging apparatus 990', for example, the first imaging apparatus 990' may realize ranging or mapping, or identify the object and a color, which in turn realizes functional diversification of the mechanical hand 90' and hence is suitable for popularization and application.

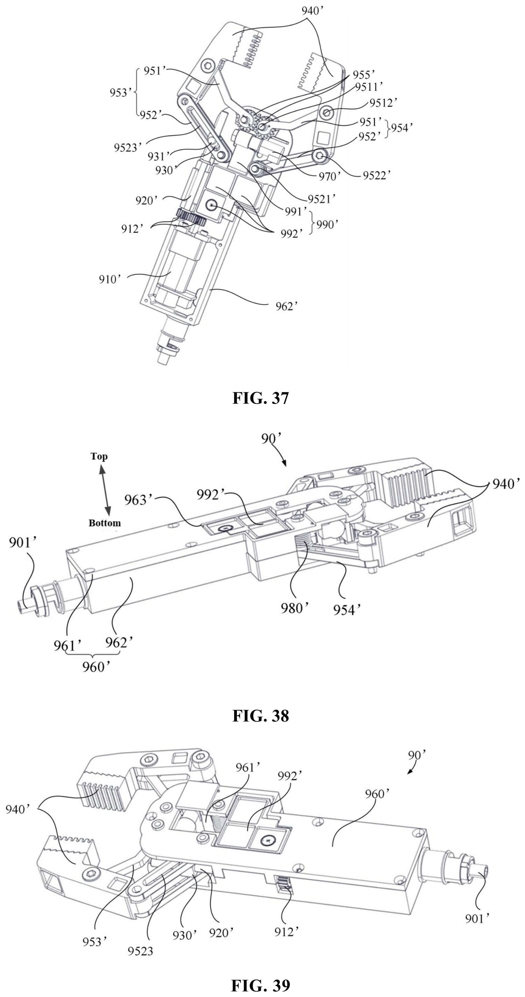

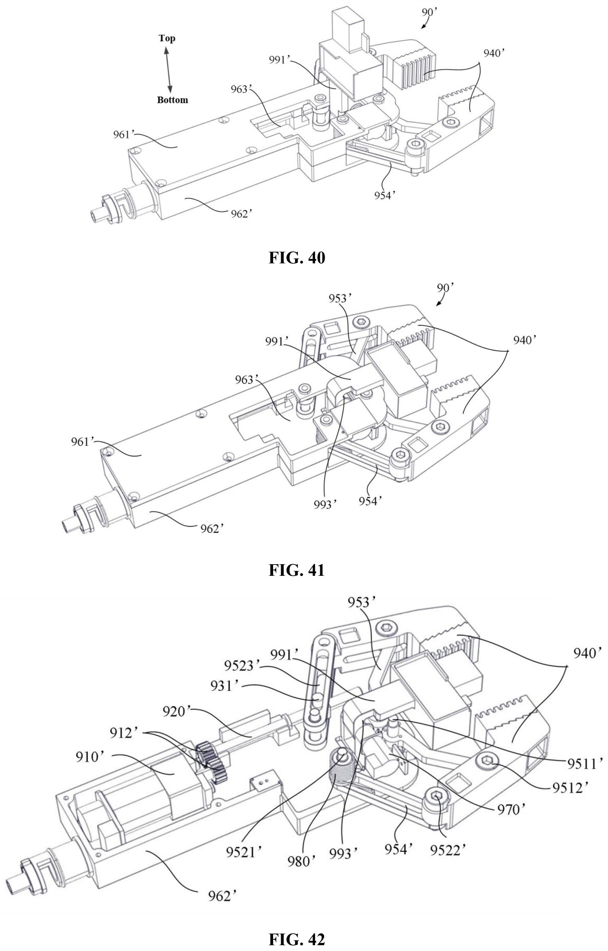

Further, the auxiliary driving part 970' is in transmission connection with the first imaging apparatus 990' to drive the first imaging apparatus 990' to roll, which in turn can change a shooting angle of the first imaging apparatus 990' to enlarge the detection range of the first imaging apparatus 990' and expand the operational range of the mechanical hand 90'. In addition, the base seat 960' of the mechanical hand 90' is provided with the holding groove 963', and under the drive of the auxiliary driving part 970', the first imaging apparatus 990' may roll to be accommodated inside the holding groove 963' or to be located outside the holding groove 963' to meet the requirements of the first imaging apparatus 990' for different shooting angles. Moreover, compared with the related art in which the first imaging apparatus is connected to an outer wall of the mechanical hand, such an arrangement is conducive to reducing the overall size of the mechanical hand in a thickness direction, and can meet the design requirement of the mechanical hand 90' for a compact structure. The directions of the top and the bottom of the mechanical hand 90' are shown by arrows in FIGs. 38 and 40, and the thickness direction of the mechanical hand 90' is a direction from the top to the bottom of the mechanical hand 90'.

Further, the auxiliary driving part 970' drives the first imaging apparatus 990' to roll relative to the base seat 960', which solves the problem of manually adjusting the shooting angle of the first imaging apparatus 990' and improves the intelligence of the mechanical hand 90'.

It can be understood that the base seat 960' may be connected to the working arm 80 of the mechanical arm 001. Specifically, the base seat 960' is rotationally connected to the working arm 80 by the fourth mechanical joint 40, and the specific structure of the fourth mechanical joint 40 will be described in detail later.

In some possible embodiments provided in the present application, the first imaging apparatus 990' includes a camera 992'. The camera 992' includes a ToF camera and an RGB camera, and the ToF camera includes a transmitting end and a receiving end. The ToF camera may be used for ranging or mapping alone, or establishing a 3D map model in cooperation with an LDS or other optical modeling sensors of the self-moving cleaning device. The RGB camera may be configured to identify the object and the color.

Further, as shown in FIGs. 36, 37, 38 and 39, the first imaging apparatus 990' includes a first extreme position inside the holding groove 963'. At the first extreme position, the top of the first imaging apparatus 990' is lower than an upper surface of the base seat 960', and the camera 992' faces upwards.

The first extreme position can be understood as an initial position of the first imaging apparatus 990', for example, a zero position of the first imaging apparatus 990'. When the first imaging apparatus 990' is at the first extreme position, the first imaging apparatus 990' is accommodated inside the holding groove 963', and the upper surface of the base seat 960' protrudes from the top of the first imaging apparatus 990'. With this arrangement, the base seat 960' well protects the first imaging apparatus 990', avoiding the problem that an obstacle scratches the first imaging apparatus 990'. This is conducive to protecting the camera 992', reducing the failure rate of the first imaging apparatus 990' and improving the product reliability. In addition, the camera 992' faces upwards when the first imaging apparatus 990' is at the first extreme position, such that when the mechanical arm 001 is accommodated inside the holding chamber 011, the camera 992' may map an upward area, and may establish a 3D map model in cooperation with the LDS or other optical modeling sensors of the self-moving cleaning device, which in turn is conducive to improving the reliability of mapping by the self-moving cleaning device and simplifying the arrangement of the sensors of the self-moving cleaning device to a certain extent.

Further, as shown in FIGs. 41 and 42, the first imaging apparatus 990' includes a second extreme position between the two clamping parts 940' moving away from each other, and the camera 992' of the first imaging apparatus 990' faces downwards at the second extreme position.

The second extreme position can be understood as a maximum rolling position of the first imaging apparatus 990'. When the first imaging apparatus 990' rolls to the second extreme position, the first imaging apparatus 990' is located between the two clamping parts 940' under the condition that the two clamping parts 940' are separated, such that the first imaging apparatus 990' reasonably utilizes a space formed by separating the two clamping parts 940' to realize a storage function, which is conducive to reducing the space occupied by the mechanical hand 90' as a whole and facilitates storage. In addition, the first imaging apparatus 990' is well protected from two sides by using the two clamping parts 940', such that the obstacle is prevented from hitting the first imaging apparatus 990' from side surfaces, which is conducive to prolonging the service life of the first imaging apparatus 990'. In addition, the camera 992' faces downwards when the first imaging apparatus 990' is at the second extreme position. Therefore, dust deposition on the camera 992' can be avoided when the mechanical arm 001 is accommodated inside the holding chamber 011, which is conducive to improving the cleanliness of the camera 992' and is in turn conducive to improving the accuracy of information collection by the first imaging apparatus 990'.

Specifically, a rolling angle of the first imaging apparatus 990' may be 180 degrees, which can provide a larger viewing angle for the mechanical arm.

As shown in FIGs. 36, 37, 38 and 42, in some possible embodiments provided in the present application, the first imaging apparatus 990' further includes an imaging bracket 991'. The camera 992' is mounted on the imaging bracket 991', an end part of the imaging bracket 991' away from the camera 992' is connected to an output shaft of the auxiliary driving part 970', and the auxiliary driving part 970' rotates to drive the imaging bracket 991' to roll.

In this embodiment, the auxiliary driving part 970' may be a motor, and the imaging bracket 991' is connected to the output shaft of the auxiliary driving part 970', for example, one end of the imaging bracket 991' sleeves the output shaft of the auxiliary driving part 970', such that the output shaft of the auxiliary driving part rotates to drive the imaging bracket 991' to roll relative to the base seat 960', and thus cause the camera 992' to roll relative to the base seat 960' as the camera 992' is mounted on the imaging bracket 991 to realize a rolling operation of the first imaging apparatus 990', achieving a simple structure, smaller dimensions and a low cost.

As shown in FIGs. 41 and 42, a part of the imaging bracket 991' between the camera 992' and the auxiliary driving part 970' is also provided with an avoidance bend 993', and the avoidance bend 993' is configured to avoid the base seat 960' when the first imaging apparatus 990' is at the second extreme position. That is to say, when the auxiliary driving part 970' acts to roll the first imaging apparatus 990' from the first extreme position to the second extreme position, the camera 992' rolls from the inside of the holding groove 963' to the outside of the holding groove 963' and is located between the two clamping parts 940' separated from each other, that is, the camera 992' rolls by 180 degrees. In addition, the arrangement of the avoidance bend 993' enables the imaging bracket 991' to avoid the side wall of the holding groove 963', such that the imaging bracket 991' is prevented from interfering with the side wall of the holding groove 963' to ensure unimpeded range of rotation of the imaging bracket 991', which ensures that the first imaging apparatus 990' may successfully roll to the second extreme position and that the top of the first imaging apparatus 990' is lower than the upper surface of the holding groove 963' when the first imaging apparatus 990' is at the first extreme position.

As shown in FIGs. 36, 37 and 41, in some possible embodiments provided in the present application, the mechanical arm 90' further includes a first connecting rod mechanism 953' and a second connecting rod mechanism 954' distributed on two outer sides of the holding groove 963' respectively, and the first connecting rod mechanism 953' and the second connecting rod mechanism 954' are in transmission connection by a main gear set 955' and are both hinged to the base seat 960' and the corresponding clamping parts 940'. That is to say, the first connecting rod mechanism 953' is hinged to the base seat 960' and one clamping part 940', the second connecting rod mechanism 954' is hinged to the base seat 960' and the other clamping part 940', and the first connecting rod mechanism 953' and the second connecting rod mechanism 954' are in transmission connection by the main gear set 955'. Therefore, the main driving part 910' is in transmission connection with the first connecting rod mechanism 953', the main driving part 910' drives the first connecting rod mechanism 953' to move, and the first connecting rod mechanism 953' drives the second connecting rod mechanism 954' to move by the main gear set 955', which in turn drives the two clamping parts 940' to approach each other or move away from each other to realize the grabbing or releasing operation of the mechanical hand 90', thereby achieving a simple structure and a low cost.

Further, since the main driving part 910' is in transmission connection with the first connecting rod mechanism 953' and the first connecting rod mechanism 953' transmits power to the second connecting rod mechanism 954' by the main gear set 955', the main driving part 910' may be arranged relatively close to the first connecting rod mechanism 953' in a centralized manner, which in turn can avoid the holding groove 963' and the first imaging apparatus 990', and meet the design requirement of the mechanical hand 90' for a compact structure.

In the above embodiment, as shown in FIGs. 37 and 42, a first rod 951' of the first connecting rod mechanism 953' and a first rod 95 1' of the second connecting rod mechanism 954' are distributed on a side of the holding groove 963' away from the main driving part 910', and first ends of the first rods 951' are hinged to the base seat 960' by first hinge points 9511'. In addition, the first end of the first rod 951' of the first connecting rod mechanism 953' and the first end of the first rod 951' of the second connecting rod mechanism 954' are in transmission connection by the main gear set 955', and second ends of the first rods 951' are hinged to the clamping parts 940' by second hinge points 9512'.

Further, a second rod 952' of the first connecting rod mechanism 953' and a second rod 952' of the second connecting rod mechanism 954' are distributed on two outer sides of the holding groove 963' respectively, first ends of the second rods 952' are hinged to the base seat 960' by third hinge points 9521', and second ends of the second rods 952' are hinged to the clamping parts 940' by fourth hinge points 9522'. The first hinge points 9511', the second hinge points 9512', the third hinge points 9521' and the fourth hinge points 9522' form parallelograms, that is, the first connecting rod mechanism 953' and the second connecting rod mechanism 954' are both parallel four-connecting-rod mechanisms. The parallel four-connecting-rod mechanisms are simple in structure and good in dynamic balance, which can be conducive to improving the stability and reliability of the mechanical hand 90'.

The main driving part 910' is in transmission connection with the second rod 952' of the first connecting rod mechanism 953', such that the main driving part 910' may act to drive the second rod 952' of the first connecting rod mechanism 953' to rotate and thus cause the clamping part 940' connected to the first connecting rod mechanism 953' to act and drive the first rod 951' of the first connecting rod mechanism 953' to rotate. By means of the main gear set 955', power is transmitted to the second connecting rod mechanism 954' to drive the first rod 951' of the second connecting rod mechanism 954' to rotate and thus drive the other clamping part 940' connected to the second connecting rod mechanism 954' to rotate. Thus, the two clamping parts 940' may approach each other or move away from each other, achieving a simple structure and being convenient to operate.

As shown in FIGs. 37 and 42, in some possible embodiments provided in the present application, the mechanical hand 90' further includes a second screw rod 920' and a second guiding nut 930'. The second screw rod 920' is in threaded connection with the second guiding nut 930' and is also connected to the main driving part 910'. The second guiding nut 930' is provided with a cylindrical boss 931'. A sliding slot 9523' is formed in the second rod 952' of the first connecting rod mechanism 953' in a direction from the first end to the second end. The cylindrical boss 931' is located inside the sliding slot 9523' and may move inside the sliding slot 9523' along with movement of the second guiding nut 930'. Therefore, the second guiding nut 930' moves relative to the second screw rod 920' when the main driving part 910' drives the second screw rod 920' to rotate. The second end of the second rod 952' of the first connecting rod mechanism 953' may be driven to rotate relative to the first end thereof through cooperation between the cylindrical boss 931' and the sliding slot 9523', that is, the second rod 952' may be driven to rotate, such that the clamping part 940' connected to the first connecting rod mechanism 953' can be driven to rotate, so as to drive the second end of the first rod 951' of the first connecting rod mechanism 953' to rotate relative to the first end, i.e., to drive the first rod 951' of the first connecting rod mechanism 953' to rotate. Therefore, the first rod 951' of the first connecting rod mechanism 953' may drive the main gear set 955' to rotate, so as to drive the second connecting rod mechanism 954' to rotate. Hence, the first connecting rod mechanism 953' and the second connecting rod mechanism 954' may be closed or opened in a scissor-like manner, thereby realizing clamping and unloading functions of the clamping parts 940'.

As the second screw rod 920' is elongated and occupies a small space in a radial direction of the second screw rod 920', the main driving part 910' and the first connecting rod mechanism 953' are connected by means of the second screw rod 920' and the second guiding nut 930', such that the second screw rod 920' may be arranged adjacent to the first connecting rod mechanism 953' or adjacent to an edge of the base seat 960' to avoid the holding groove 963' and the first imaging apparatus 990', thereby meeting the design requirement of the mechanical hand 90' for a compact structure.

As shown in FIGs. 37 and 42, in some possible embodiments provided in the present application, the mechanical hand 90' further includes an elastic resetting member 980' connected between the first end of the second rod 952' of the second connecting rod mechanism 954' and the base seat 960', and the elastic resetting member 980' is configured to apply a rotational force to the second connecting rod mechanism 954' in a direction away from the first connecting rod mechanism 953'.

That is to say, when the main driving part 910' does not work, the second connecting rod mechanism 954' rotates away from the first connecting rod mechanism 953' under the action of the elastic resetting member 980', that is, the first connecting rod mechanism 953' and the second connecting rod mechanism 954' are opened in a scissor-like manner, such that the two clamping parts 940' move away from each other. When the main driving part 910' works, the main driving part 910' drives the first connecting rod mechanism 953' to act, such that the first connecting rod mechanism 953' rotates to approach the second connecting rod mechanism 954', that is, the first connecting rod mechanism 953' and the second connecting rod mechanism 954' are closed in a scissor-like manner. Thus, the two clamping parts 940' approach each other. The arrangement of the elastic resetting member 980' enables the mechanical hand 90' to switch between clamping and unloading actions, and also meets different functions.

Specifically, the elastic resetting member 980' is a torsional spring, and the torsional spring is connected between the base seat 960' and the first end of the second connecting rod mechanism 954'. As shown in FIG. 37, the torsional spring applies a clockwise rotational force to the second connecting rod mechanism 954' to keep the second connecting rod mechanism 954' away from the first connecting rod mechanism 953'.

As shown in FIGs. 37, 39 and 42, in some possible embodiments provided in the present application, the mechanical hand 90' further includes an auxiliary gear set 912', the output shaft of the main driving part 910' is in transmission connection with the second screw rod 920' by the auxiliary gear set 912', and the second screw rod 920' is located on a side of the holding groove 963' close to the first connecting rod mechanism 953'.

A transmission direction of the main driving part 910' and the second screw rod 920' may be changed by the auxiliary gear set 912', such that the second screw rod 920' may be arranged to avoid the holding groove 963' and the first imaging apparatus 990'. For example, the second screw rod 920' may be arranged close to an edge of the base seat 960'. Therefore, space is reserved for providing the holding groove 963', and space is also reserved for rolling of the first imaging apparatus 990', which can ensure that the first imaging apparatus 990' rolls smoothly between the first extreme position and the second extreme position, to guarantee that the mechanical hand 90' has a large shooting angle. In addition, the mechanical hand 90' is compact in structure and smaller in dimension.

That is to say, for the mechanical hand 90' provided by the embodiments of the present application, the main driving part 910' works to drive the second screw rod 920' to rotate by the auxiliary gear set 912'. Since the second guiding nut 930' on the second screw rod 920' moves relative to the second screw rod 920', through the cooperation between the cylindrical boss 931' on the second guiding nut 930' and the sliding slot' on the first connecting rod mechanism 953', the first connecting rod mechanism 953' may be driven to rotate. The first connecting rod mechanism 953' drives the second connecting rod mechanism 954' to rotate by the main gear set 955', such that the first connecting rod mechanism 953' and the second connecting rod mechanism 954' may be closed or opened in a scissor-like manner, thereby realizing the clamping and unloading functions of the clamping parts 940'. In addition, with this arrangement, a first imaging apparatus and the holding groove 963' may be avoided, making the structure of the mechanical hand 90' compact.

As shown in FIGs. 38 and 40, in some possible embodiments provided in the present application, the base seat 960' includes a first cover plate 961' and a second cover plate 962'. Parts of the first cover plate 961' and the second cover plate 962' are connected to each other and define a chamber for accommodating the main driving part 910'. A gap is reserved between other parts of the first cover plate 961' and the second cover plate 962'. The second guiding nut 930' and the second screw rod 920' are located inside the gap.

That is, the main driving part 910' is mounted inside the chamber enclosed by the first cover plate 961' and the second cover plate 962', such that the first cover plate 961' and the second cover plate 962' well protect the main driving part 910'. The second guiding nut 930' and the second screw rod 920' are located inside the gap between the first cover plate 961' and the second cover plate 962'. Therefore, the first cover plate 961' and the second cover plate 962' well protect the second guiding nut 930' and the second screw rod 920', which is conducive to improving the reliability of the mechanical hand 90' and is also conducive to improving the aesthetic appeal and neatness of the appearance of the mechanical hand 90'. Moreover, the gap between the first cover plate 961' and the second cover plate 962' provides sufficient movement space for the second guiding nut 930' and the second screw rod 920'. Specifically, the first connecting rod mechanism 953' and the second connecting rod mechanism 954' may also be partially located inside the gap between the first cover plate 961' and the second cover plate 962'.

The first cover plate 961' is located above the second cover plate 962', and the first cover plate 961' is provided with the holding groove 963', such that the first imaging apparatus 990' may roll from the top of the base seat 960' to be located inside the receiving groove 963' and roll from the top of the base seat 960' to be located between the two separated clamping parts 940'. Specifically, the first cover plate 961' and the second cover plate 962' may be detachably connected by means of a bolt and clamping, so as to facilitate maintenance of the second guiding nut 930', the second screw rod 920', the first connecting rod mechanism 953' and the second connecting rod mechanism 954' located between the two cover plates, thereby achieving high convenience in operation.

As shown in FIGs. 1, 2 and 3, the self-moving cleaning device 002 provided by the embodiment of the present application includes a device main body 010 and a mechanical arm 001. The device main body 010 includes a holding chamber 011. Two driving wheels 020 and one driven wheel 030 are distributed at the bottom of the device main body 010 in a triangular form. The mechanical arm 001 is foldably accommodated inside the holding chamber 011. A mounting structure for mounting of the mechanical arm 001 is arranged inside the holding chamber 011. A projection of the mounting structure within a horizontal plane falls within a projection of the triangle within the horizontal plane.

In this embodiment, the mechanical arm 001 is connected to the holding chamber 011 of the device main body 010 by the mounting structure arranged inside the holding chamber 011, that is, the mechanical arm 001 is mounted inside the holding chamber 011 of the device main body 010 by the mounting structure, such that the mechanical arm 001 may synchronously move with the device main body 010, and then reach an intended working position along with the device main body 010. The mechanical arm 001 is foldably accommodated in the holding chamber 011, such that the mechanical arm 001 may be accommodated in the holding chamber 011 after being folded. The mechanical arm 001 in a folded state occupies less space and is smaller in dimension and thus convenient to store. In addition, the holding chamber 011 is arranged in the device main body 010, such that the mechanical arm 001 may be stored by making full use of the structure of the device main body 010, which achieves a simple structure and can meet the design requirements of the self-moving cleaning device 002 for a compact structure and smaller dimensions.

The driving system includes two driving wheels 020 and one driven wheel 030, and the two driving wheels 020 and the driven wheel 030 are distributed at the bottom of the device main body 010 in a triangular form. The triangular area is a triangular area as shown in FIG. 3, where P is located. With this arrangement, movement of the device main body 010 can be realized, and the device main body 010 may have good stability during the movement. The projection of the mounting structure arranged inside the holding chamber 011 for mounting of the mechanical arm 001 within the horizontal plane falls within the projection of the triangle within the horizontal plane, indicating that the mounting position of the mechanical arm 001 on the device main body 010 is located within the triangular area formed by the two driving wheels 020 and the driven wheels 030. With this arrangement, the self-moving cleaning device 002 can achieve an optimal center of gravity, that is, the center of gravity of the self-moving cleaning device 002 may coincide with or be at a shorter distance from a supporting center formed by the two driving wheels 020 and the one driven wheel 030, which ensures the operating stability and reliability of the self-moving cleaning device 002 and avoids the situation that the mounting of the mechanical arm 001 outside the triangular area may easily lead to overturn of the device main body 010.

As shown in FIG. 3, in some possible embodiments provide in the present application, the two driving wheels 020 are distributed in a transverse direction of the device main body 010, and the mechanical arm 001 is arranged close to the two driving wheels 020. Therefore, the horizontal dimension of the mechanical arm 001 can be increased as much as possible to improve the strength of the mechanical arm 001 while ensuring the good stability and reliability of the self-moving cleaning device 002.

Generally, the two driving wheels 020 are distributed at positions near the middle of the device main body 010 in the transverse direction of the device main body 010, while the driven wheel 030 is distributed at the front end of the bottom of the device main body 010, that is, the distance between the two driving wheels 020 is greater than the distance between the driven wheel 030 and each of the driving wheel 020. Therefore, by providing the holding chamber 011 close to the two driving wheels 020 and providing the mechanical arm 001 close to the two driving wheels 020, the horizontal dimension (e.g., length) of the mechanical arm 001 is larger, that is, the area of connection between the mechanical arm 001 and the holding chamber 011 can be increased, which in turn enables the mechanical arm 001 to be stably and reliably connected to the holding chamber 011 of the device main body 010. In this way, the probability that the device main body 010 turns over due to a larger unfolding range of the mechanical arm 001 can be reduced when the mechanical arm 001 is unfolded to work, which in turn can improve the operating stability and safety of the self-moving cleaning device 002, and improve the user satisfaction.

As shown in FIG. 2, in some possible embodiments provided in the present application, an end of the mechanical arm 001 away from the driving wheel 020 and/or the driven wheel 030 is not higher than the upper surface of the device main body 010 when the mechanical arm 001 is foldably accommodated in the holding chamber 011.

That is to say, the mechanical arm 001 may not protrude from the upper surface of the device main body 010 when the mechanical arm 001 is foldably accommodated in the holding chamber 011, i.e., the mechanical arm 001 in this posture may not increase the height of the device main body 010. Therefore, it is possible to avoid the problem that the mechanical arm 001 protrudes from the upper surface of the device main body 010, causing a protruding portion to collide with the obstacle and hence limiting the range of movement of the self-moving cleaning device 002, i.e., the mechanical arm 001 foldably accommodated inside the holding chamber 011 may not influence the original range of movement of the self-moving cleaning device 002. Therefore, in the self-moving cleaning device 002 provided by the embodiment of the present application, the original function of the self-moving cleaning device 002 may not be influenced when the mechanical arm 001 is added to expand the function of the self-moving cleaning device 002.

In some possible embodiments provided in the present application, as shown in FIG. 1, the self-moving cleaning device 002 further includes a second imaging apparatus 050 arranged in front of a device main body 010; a control system 060 configured to identify an obstacle and control a working state of the mechanical arm 001 according to information collected by the first imaging apparatus 990 and the second imaging apparatus 050 so as to grab and unload the obstacle.

The second imaging apparatus 050 may be an original imaging apparatus of the self-moving cleaning device 002. Therefore, through the cooperation between the first imaging apparatus 990 and the second imaging apparatus 050, the obstacle near the self-moving cleaning device 002 and spatial position coordinates of its grabbing point can be identified with reference to an AI algorithm, so as to move or clean up the obstacle.

Further, as shown in FIG. 35, the self-moving cleaning device 002 further includes a processing system 070. The processing system 070 interacts with the control system 060. The control system 060 is electrically connected to the second driving part 110, the first driving part 220, the third diving parts of the two third mechanical joints 30, the fourth driving part 410, the fifth driving part 910 and the sixth driving part 970 of the mechanical arm 001. The processing system 070 acquires information collected by the first imaging apparatus 990 and the second imaging apparatus 050, processes the information with reference to detection results of all rotation angle detecting apparatuses according to a kinematics solving algorithm, and transmits a solving result to the control system 060. The control system 060 issues an instruction to each driving part to drive each driving part to move to a target position, which in turn enables the mechanical arm 001 to reach a target position to perform a corresponding operation.

It can be understood that only the second driving part 110 is arranged on the base 50, and the first driving part 220, the third driving parts of the two third mechanical joints 30, the fourth driving part 410, the fifth driving part 910 and the sixth driving part 970 are correspondingly distributed on the support arm 60, the connecting arm 70 and the working arm 80 of the mechanical arm 001.

Further, the control system 060 may also view and measure the distance between the clamping part 940 and the obstacle by using a partial field of view of the first imaging apparatus 990, so as to realize partial logical judgment of the clamping parts 940, which in turn improves the accuracy and reliability of the clamping parts 940 in clamping the obstacle.

As shown in FIG. 35, the field of view of the first imaging apparatus 990 may be divided into a secondary field of view C1 and a primary field of view C2. An angle of C1 is smaller than that of C2, for example, the ratio of C1 to C2 is 1:4. It can be understood that the ratio of C1 to C2 may also be other values. The secondary field of view C1 may cover most of the clamping part areas. Thus, the distance between the clamping part 940 and the obstacle may be viewed and measured by using the secondary field of view C1 of the first imaging apparatus 990, and information about the distance between the clamping part 940 and its surroundings may be viewed by using the secondary field of view C1 of the first imaging apparatus 990, which makes it convenient to control the mechanical arm to reasonably move in order to accurately clamp the object.

In some possible embodiments provided in the present application, the control system 060 is also configured to: control the second mechanical joint 20 to unfold the support arm 60 relative to the rotatable base 55 to be perpendicular to the base 50 when the mechanical arm 001 is in a working posture; and control the mechanical arm 001 to act and to be folded for storage inside the holding chamber 011 when the self-moving cleaning device 002 establishes a map or the mechanical arm 001 is in a non-working posture.

That is to say, the support arm 60 of the mechanical arm 001 is vertically arranged relative to the base 50 when the mechanical arm 001 is working, that is, the support arm 60 is completely erected. This arrangement can reduce the influence of the mechanical arm 001 on a navigation system, which in turn improves the operating reliability of the self-moving cleaning device 002.

When the self-moving cleaning device 002 establishes a map, the control system 060 may control the mechanical arm 001 to act and to be folded for storage inside the holding chamber 011, that is, the mechanical arm 001 is accommodated in the holding chamber 011. This arrangement can prevent the mechanical arm 001 from extending out of the holding chamber 011 and affecting operation of a laser sensor, and also can prevent the mechanical arm 001 from extending out of the holding chamber 011 and colliding with the obstacle, which in turn improves the reliability of the self-moving cleaning device 002.

When the mechanical arm 001 is in a non-working posture, for example, when it is unnecessary to grab the obstacle using the mechanical arm 001, the control system 060 may control the mechanical arm 001 to act and to be folded for storage inside the holding chamber 011, that is, the mechanical arm 001 is accommodated inside the holding chamber 011. This arrangement can prevent the mechanical arm 001 from extending out of the holding chamber 011 and affecting the self-moving cleaning device 002 in performing cleaning, charging and other operations, and ensures that other operations of the self-moving cleaning device 002 can be carried out reliably. It can be understood that the obstacle described above may also be an object required by the user, such as a remote controller and an apple, which may not be listed one by one here.

It should be understood that the above specific embodiments of the present application are only for exemplary illustration or explanation of the principles of the present application, and do not constitute a limitation to the present application. Therefore, any modifications, equivalent substitutions, improvements, etc. made without departing from the spirit and scope of the present application should be included in the scope of protection of the present application. Furthermore, the appended claims of the present application are intended to cover all variations and modifications that fall within the scope and boundary of the appended claims, or equivalent forms of such a scope and boundary.

In the present application, the terms "first", "second" and "third" are used for a descriptive purpose only and shall not be construed as indicating or implying relative importance; and the term "a plurality of" refers to two or more, unless otherwise specified. The terms "mount", "connected with", "connected to", "fixed" and the like should be comprehended in a broad sense. For example, the term "connection to" may refer to a fixed connection, detachable connection or integrated connection; and the term "connected with" may refer to a direct connection or an indirect connection via an intermediary. For those of ordinary skill in the art, specific meanings of the foregoing terms in the present application can be understood based on specific situations.

In the descriptions of the present application, it should be understood that orientation or positional relationships indicated by the terms "upper", "lower", "left", "right", "front", "rear", etc. are orientation or positional relationships shown on the basis of the drawings, only for the purposes of the ease in describing the present application and simplification of its descriptions, but not indicating or implying that the specified device or unit has to be specifically located, and structured and operated in a specific direction, and therefore, should not be understood as limitations to the present application.

In the descriptions of the description, the terms "one embodiment", "some embodiments" and "specific embodiments" are described to mean that the specific features, structures, materials or characteristics described in combination with this embodiment or example are included in at least one embodiment or example of the present application. In the present description, schematic description of the above terms does not necessarily refer to the same embodiment or example. Furthermore, the described specific features, structures, materials or characteristics can be combined in any one or more embodiments or examples in a proper manner.

Described above are only the preferred embodiments of the present application, but not intended to limit the present application. Various changes and modifications may be made to the present application for those skilled in the art. Any modifications, equivalent substitutions, improvements, etc., made within the spirit and principles of the present application should be included within the scope of protection of the present application.

## Claims

1. A mechanical joint applicable to a mechanical arm (001), wherein the mechanical arm (001) comprises a rotatable base (55) and a support arm (60) hinged to the rotatable base (55), and the mechanical joint comprises:
a first guiding nut (210), a first screw rod (230) and a first driving part (220), wherein the first guiding nut (210) is in threaded connection with the first screw rod (230) and hinged to the rotatable base (55), the first driving part (220) is arranged on the support arm (60), a first end of the first screw rod (230) is connected to the first driving part (220), and a second end of the first screw rod (230) passes through the first guiding nut (210) and faces the rotatable base (55); and
the first driving part (220) is configured to drive the first screw rod (230) to rotate, such that the first screw rod (230) and the first guiding nut (210) move relative to each other to drive the support arm (60) to raise or lower relative to the rotatable base (55).

2. The mechanical joint according to claim 1, further comprising:
a motor seat (240), wherein the motor seat (240) is hinged to the support arm (60), the first driving part (220) is mounted on the motor seat (240), and the first screw rod (230) is inserted into the motor seat (240) and connected to the first driving part (220).

3. The mechanical joint according to claim 2, wherein
the motor seat (240) is hinged to the support arm (60) through a cylindrical boss; and
the first guiding nut (210) is hinged to the rotatable base (55) through a cylindrical boss.

4. The mechanical joint according to claim 2, further comprising:
a thrust bearing (250), wherein the first screw rod (230) is sleeved with the thrust bearing (250), the first screw rod (230) is provided with a stepped structure (231), and the thrust bearing (250) is located between the stepped structure (231) and the motor seat (240), such that the first screw rod (230) is rotatably connected to the motor seat (240).

5. The mechanical joint according to claim 2, further comprising:
an elastic member (260), wherein the elastic member (260) is connected to the rotatable base (55) and the support arm (60), and the elastic member (260) is configured to apply a thrust force to the support arm (60) in a direction toward the rotatable base (55).

6. The mechanical joint according to claim 2, further comprising:
an anti-pulling member (280), wherein the first screw rod (230) is provided with an anti-pulling groove (232) located inside the motor seat (240), and the anti-pulling member (280) is connected to the motor seat (240) and extends into the anti-pulling groove (232).

7. The mechanical joint according to claim 6, wherein
the anti-pulling member (280) is an anti-pulling screw, and the anti-pulling groove (232) is an annular groove.

8. The mechanical joint according to claim 2, further comprising:
a limit switch (290), wherein the limit switch (290) is arranged on the support arm (60), and the first driving part (220) rotates or stops rotating according to a triggering state of the limit switch (290); and
the limit switch (290) is triggered when the support arm (60) rotates to a first preset position.

9. The mechanical joint according to claim 8, wherein the limit switch (290) comprises:
a switch main body (291) and a trigger (292), wherein the switch main body (291) is arranged on one side of the support arm (60), one end of the trigger (292) is connected with the switch main body (291) and the other end of the trigger (292) extends away from the switch main body (291); and
when the support arm (60) rotates to the first preset position, the other end of the trigger (292) is suitable for abutting against a foreign object and contacting with the switch main body (291) to trigger the limit switch (290).

10. The mechanical joint according to any one of claims 1 to 8, further comprising:
a first rotation angle detecting apparatus, wherein the first rotation angle detecting apparatus is arranged on the first driving part (220) and is configured to detect a rotation angle of an output shaft of the first driving part (220), and the first driving part (220) also rotates or stops rotating according to a detection result of the first rotation angle detecting apparatus.

11. A mechanical arm (001), comprising the mechanical joint according to any one of claims 1 to 10.

12. A self-moving cleaning device (002), comprising the mechanical arm (001) according to claim 11.
